# EUROPEAN PATENT SPECIFICATION

(11) **EP 2 858 326 B1**
(45) Date of publication and mention of the grant of the patent: **04.10.2017**
(21) Application number: 13864218.6
(22) Date of filing: 10.12.2013
(51) Int. Cl.: H04L 29/06

(54) **SERVICE INFORMATION DISCOVERY METHOD AND DEVICE**
DIENSTINFORMATIONSERKENNUNGSVERFAHREN UND VORRICHTUNG
PROCÉDÉ ET DISPOSITIF POUR LA RECHERCHE DE DONNÉES DE SERVICE

(30) Priority: 17.12.2012 CN 201210548032
(43) Date of publication of application: 08.04.2015
(73) Proprietor: Huawei Device Co., Ltd., Shenzhen, Guangdong 518129 (CN)
(72) Inventor: CHEN, Ji, Shenzhen Guangdong 518129 (CN); DING, Zhiming, Shenzhen Guangdong 518129 (CN)
(74) Representative: Kreuz, Georg Maria
(86) International application number: PCT/CN2013/088911
(87) International publication number: WO 2014/094556

(56) References cited:
- CN-A- 101 605 299
- CN-A- 101 779 477
- CN-A- 102 438 004
- US-A1- 2010 235 525
- US-A1- 2011 153 773
- LEI, WANBAO ET AL.: 'Recent development of service discovery mechanism' APPLICATION RESEARCH OF COMPUTERS vol. 26, no. 5, May 2009, pages 1604 - 1606, XP008175767

## Description

### TECHNICAL FIELD

The present invention relates to communications technologies, and in particular, to a service information discovery method and device.

### BACKGROUND

Wireless fidelity (Wireless Fidelity, WiFi for short) is widely applied in various industries due to its advantages such as fast deployment, convenience for use, and a high transmission rate. WiFi network composition is as follows: An access point (Access Point, AP for short) provides an access service for multiple stations (Stations, STA for short), and the AP and the STAs exchange information by using radio signals. A service refers to a function or information provided by an AP or a STA for another STA. For example, an Internet Protocol (Internet Protocol, IP for short) connection function that can be provided by an AP is a service; for another example, for a printer with an AP, where the AP indicates that the printer provides a print function, the print function is also a service.

Before using a service provided by an AP or another STA, a STA first needs to discover the AP or the another STA. After discovering the AP or the another STA, the STA further needs to query whether the required service exists. For example, when a first STA requires an IP connection service, the first STA first needs to query whether an AP or a second STA may provide the IP connection service; for another example, when the first STA needs to play an online game with another STA that is installed with the same game as the first STA, the first STA first needs to discover which STAs are installed with the same game, and further know which STAs have a service that the first STA requires.

In the prior art, when a STA discovers a service, one manner is actively sending a query request message, where the query request message carries a piece of complete service identity information used to identify a service that needs to be discovered, and then learning, from a query response message of a peer end, whether the peer end has the service that the STA requires; another manner is listening to service information broadcast by a peer end, learning, from a service information indication message broadcast by the peer end, whether the peer end has a service that the STA requires, where the service information indication message broadcast by the peer end carries complete service identity information of various services that the peer end can provide. In an actual application of WiFi, a STA generally needs to continuously query whether a neighboring device has a service that the STA requires; or a STA or an AP needs to continuously broadcast, to neighboring devices, services that the STA or AP can provide, so as to find a device that is interested in the services of the STA or AP. As seen above, a large quantity of query request messages or broadcast service information indication messages exist in a WiFi network; because complete service identity information is generally long, utilization of channel resources is not high.

US 2010/235525 A1 discloses techniques for discovering and/or advertising services. A first bitmask is received from a remote device over a wireless network, the first bitmask having one or more bits that have a predetermined logical value. Each bit represents a particular service provided by the remote device. A logical operation is performed between the first bitmask and a second bitmask locally generated within a local device, where the second bitmask represents a service being searched by the local device. It is determined whether the remote device is potentially capable of providing the service being searched by the local device based on a result of the logical operation.

US 2011/153773 A1 discloses operating conditions of a remote device and operating conditions of a local device that are compared, where the local device and the remote device are located within a predetermined proximity of a wireless network. An advertisement request is transmitted from the local device to the remote device based on the comparison of the operating conditions of the local device and the remote device. The advertisement request includes information identifying one or more services advertised by the local device, whereby the remote device is configured to advertise the one or more services on behalf of the local device in the wireless network.

### SUMMARY

Embodiments of the present invention provide service information discovery methods and devices of claims 1, 3, 5, 7, 9, 11 and 13, respectively, which are used to improve utilization of channel resources during service discovery.

According to a first aspect, a service information discovery method is provided and includes:
sending (101), by a service information discovery device, a first query request message, wherein the first query request message carries a first hash value, and the first hash value is obtained by performing a first hash operation on service identity information of a service to be discovered;
receiving (102), by the service information discovery device, a first query response message sent by a service information providing device, wherein the first query response message carries first result notification information, wherein the first result notification information is used to identify whether a service of which a hash value obtained by performing the first hash operation is the first hash value exists at the service information providing device; and
determining (103), by the service information discovery device, according to at least the first result notification information, whether the service to be discovered exists at the service information providing device;
characterized in that the first result notification information comprises at least one second hash value, wherein the second hash value is obtained by the service information providing device by performing a second hash operation on service identity information of at least one service of which the hash value obtained by performing the first hash operation is the first hash value; and
the step of determining comprises:
   performing, by the service information discovery device, the second hash operation on the service identity information of the service to be discovered, and obtaining, by the service information discovery device, the second hash value corresponding to the service to be discovered; and
   if the second hash value corresponding to the service to be discovered exists in the first result notification information, determining that the service to be discovered exists at the service information providing device.

According to the first aspect, in a first possible implementation manner of the first aspect, the first result notification information is existence indication information used to indicate that the service of which the hash value obtained by performing the first hash operation is the first hash value exists at the peer end; and
the determining, according to at least the first result notification information, whether the service to be discovered exists at the peer end, includes: sending a second query request message to the peer end according to the existence indication information, where the second query request message carries the service identity information of the service to be discovered; receiving a second query response message returned by the peer end, where the second query response message carries second result notification information, and the second result notification information is used to identify whether the service to be discovered exists at the peer end; and if the second result notification information identifies that the service to be discovered exists at the peer end, determining that the service to be discovered exists at the peer end.

According to the first aspect, in a second possible implementation manner of the first aspect, the first result notification information is a second hash value, where the second hash value is obtained by the peer end by performing a second hash operation on service identity information of a service of which a hash value obtained by performing the first hash operation is the first hash value; and
the determining, according to at least the first result notification information, whether the service to be discovered exists at the peer end, includes: performing the second hash operation on the service identity information of the service to be discovered, and obtaining the second hash value corresponding to the service to be discovered; and if the second hash value corresponding to the service to be discovered exists in the first query response message, determining that the service to be discovered exists at the peer end.

According to the second possible implementation manner of the first aspect, in a third possible implementation manner of the first aspect, a bit length of the second hash operation is greater than a bit length of the first hash operation.

According to the first aspect, in a fourth possible implementation manner of the first aspect, the first result notification information is service identity information of the service of which the hash value obtained by performing the first hash operation is the first hash value; and
the determining, according to at least the first result notification information, whether the service to be discovered exists at the peer end, includes: if the service identity information of the service to be discovered exists in the first query response message, determining that the service to be discovered exists at the peer end.

According to a second aspect, a service information discovery method is provided and includes:
receiving (101), by a service information providing device, a first query request message, wherein the first query request message carries a first hash value, and the first hash value is obtained, by performing a first hash operation on service identity information of a service to be discovered, by a service information discovery device that sends the first query request message; and
sending, by the service information providing device, a first query response message, wherein the first query response message carries first result notification information, so that the service information discovery device determines, according to at least the first result notification information, whether the service to be discovered exists at the service information providing device, wherein the first result notification information is used to identify whether a service of which a hash value obtained by performing the first hash operation is the first hash value exists at the service information providing device;
wherein the step of sending comprises:
   determining, by the service information providing device, according to the first hash value, whether the service of which the hash value obtained by performing the first hash operation is the first hash value exists at the service information providing device; the method is characterized by:
      if it is determined that the service of which the hash value obtained by performing the first hash operation is the first hash value exists at the service information providing device, obtaining, by the service information providing device, a second hash value corresponding to the service of which the hash value obtained by performing the first hash operation is the first hash value, wherein the second hash value is obtained by the service information providing device by performing a second hash operation on service identity information of the service of which the hash value obtained by performing the first hash operation is the first hash value; and
      encapsulating, by the service information providing device, the second hash value corresponding to the service of which the hash value obtained by performing the first hash operation is the first hash value, into the first query response message as the first result notification information, and sending, by the service information providing device, the first query response message to the service information discovery device.

According to the second aspect, in a first possible implementation manner of the second aspect, the sending a first query response message includes: determining, according to the first hash value, whether the service of which the hash value obtained by performing the first hash operation is the first hash value exists at the local end; and if it is determined that the service of which the hash value obtained by performing the first hash operation is the first hash value exists at the local end, encapsulating existence indication information into the first query response message as the first result notification information, and sending the first query response message to the peer end, where the existence indication information is used to identify that the service of which the hash value obtained by performing the first hash operation is the first hash value exists at the local end.

According to the first possible implementation manner of the second aspect, in a second possible implementation manner of the second aspect, the method further includes: receiving a second query request message sent by the peer end according to the existence indication information, where the second query request message carries the service identity information of the service to be discovered; and sending a second query response message to the peer end, where the second query
response message carries second result notification information, so that the peer end determines, according to the second result notification information, whether the service to be discovered exists at the local end, where the second result notification information is used to identify whether the service to be discovered exists at the local end.

According to the second aspect, in a third possible implementation manner of the second aspect, the sending a first query response message includes: determining, according to the first hash value, whether the service of which the hash value obtained by performing the first hash operation is the first hash value exists at the local end; if it is determined that the service of which the hash value obtained by performing the first hash operation is the first hash value exists at the local end, obtaining a second hash value corresponding to the service of which the hash value obtained by performing the first hash operation is the first hash value, where the second hash value is obtained by performing a second hash operation on service identity information of the service of which the hash value obtained by performing the first hash operation is the first hash value; and encapsulating the second hash value corresponding to the service of which the hash value obtained by performing the first hash operation is the first hash value, into the first query response message as the first result notification information, and sending the first query response message to the peer end.

According to the third possible implementation manner of the second aspect, in a fourth possible implementation manner of the second aspect, a bit length of the second hash operation is greater than a bit length of the first hash operation.

According to the second aspect, in a fifth possible implementation manner of the second aspect, the sending a first query response message includes: determining, according to the first hash value, whether the service of which the hash value obtained by performing the first hash operation is the first hash value exists at the local end; and if it is determined that the service of which the hash value obtained by performing the first hash operation is the first hash value exists at the local end, encapsulating service identity information of the service of which the hash value obtained by performing the first hash operation is the first hash value, into the first query response message as the first result notification information, and sending the first query response message to the peer end.

According to a third aspect, a service information discovery method is provided and includes:
receiving a service information indication message, where the service information indication message carries hash value indication information, and the hash value indication information is used to identify hash values obtained according to service identity information of services which exist at a peer end that sends the service information indication message; and
determining, according to at least the hash value indication information, whether a service that needs to be discovered by a local end exists at the peer end.

According to the third aspect, in a first possible implementation manner of the third aspect, a manner in which the service information indication message carries the hash value indication information includes that: the service information indication message includes a bit table and a bit table length, where in the bit table, positions corresponding to the hash values obtained according to the service identity information of the services that exist at the peer end are set to 1, and the bit table length is determined according to a quantity of the services that exist at the peer end.

According to the third aspect or the first possible implementation manner of the third aspect, in a second possible implementation manner of the third aspect, the determining, according to the hash value indication information, whether a service that needs to be discovered by a local end exists at the peer end, includes: obtaining a first hash value corresponding to the service that needs to be discovered by the local end, where the first hash value is obtained by performing a first hash operation on service identity information of the service that needs to be discovered by the local end; and determining, according to at least whether the first hash value exists in the hash values identified by the hash value indication information, whether the service that needs to be discovered by the local end exists at the peer end.

According to the second possible implementation manner of the third aspect, in a third possible implementation manner of the third aspect, the determining, according to at least whether the first hash value exists in the hash values identified by the hash value indication information, whether the service that needs to be discovered by the local end exists at the peer end, includes: if the first hash value exists in the hash values identified by the hash value indication information, sending a first query request message to the peer end, where the first query request message carries the service identity information of the service that needs to be discovered by the local end; receiving a first query response message sent by the peer end, where the first query response message carries first result notification information, and the first result notification information is used to identify whether the service that needs to be discovered by the local end exists at the peer end; and if the first result notification information identifies that the service that needs to be discovered by the local end exists at the peer end, determining that the service that needs to be discovered by the local end exists at the peer end.

According to the second possible implementation manner of the third aspect, in a fourth possible implementation manner of the third aspect, the determining, according to at least whether the first hash value exists in the hash values identified by the hash value indication information, whether the service that needs to be discovered by the local end exists at the peer end, includes: if the first hash value exists in the hash values identified by the hash value indication information, sending a second query request message to the peer end, where the second query request message carries the first hash value and a second hash value corresponding to the service that needs to be discovered by the local end, and the second hash value corresponding to the service that needs to be discovered by the local end is obtained by performing a second hash operation on the service identity information of the service that needs to be discovered by the local end; receiving a second query response message sent by the peer end, where the second query response message carries second result notification information, where the second result notification information is used to identify whether a service of which a hash value obtained by performing the second hash operation is the same as the second hash value corresponding to the service that needs to be discovered by the local end, exists in services of which the hash value obtained by performing the first hash operation is the first hash value at the peer end; and if the second result notification information identifies that the service of which the hash value obtained by performing the second hash operation is the same as the second hash value corresponding to the service that needs to be discovered by the local end, exists in the services of which the hash value obtained by performing the first hash operation is the first hash value at the peer end, determining that the service that needs to be discovered by the local end exists at the peer end.

According to a fourth aspect, a service information discovery method is provided and includes:
obtaining hash values corresponding to services that exist at a local end, where the hash values are obtained by performing a first hash operation on service identity information of the services that exist at the local end; and
broadcasting a service information indication message, where the service information indication message carries hash value indication information, so that a peer end that receives the service information indication message determines, according to at least the hash value indication information, whether a service that needs to be discovered by the peer end exists at the local end, where the hash value indication information is used to identify the hash values corresponding to the services that exist at the local end.

According to the fourth aspect, in a first possible implementation manner of the fourth aspect, the broadcasting a service information indication message includes: determining a bit table length according to a quantity of the services that exist at the local end; and encapsulating a bit table and the bit table length into the service information indication message, and setting positions corresponding to the hash values corresponding to the services that exist at the local end to 1, and then broadcasting the service information indication message.

According to the fourth aspect or the first possible implementation manner of the fourth aspect, in a second possible implementation manner of the fourth aspect, after the broadcasting a service information indication message, the method further includes: receiving a first query request message sent by the peer end, where the first query request message carries service identity information of the service that needs to be discovered by the peer end; and sending a first query response message to the peer end according to the service identity information of the service that needs to be discovered by the peer end, where the first query response message carries first result notification information, and the first result notification information is used to identify whether the service that needs to be discovered by the peer end exists at the local end, so that the peer end determines, according to at least the first result notification information, whether the service that needs to be discovered by the peer end exists at the local end.

According to the fourth aspect or the first possible implementation manner of the fourth aspect, in a third possible implementation manner of the fourth aspect, after the broadcasting a service information indication message, the method further includes: receiving a second query request message sent by the peer end, where the second query request message carries a first hash value corresponding to the service that needs to be discovered by the peer end and a second hash value corresponding to the service that needs to be discovered by the peer end, where the first hash value and second hash value corresponding to the service that needs to be discovered by the peer end are obtained by respectively performing the first hash operation and a second hash operation on service identity information of the service that needs to be discovered by the peer end; and sending a second query response message to the peer end according to the first hash value and second hash value, where the second query response message carries second result notification information, and the second result notification information is used to identify whether a service of which a hash value obtained by performing the second hash operation is the same as the second hash value, exists in services of which the hash value obtained by performing the first hash operation is the first hash value at the local end, so that the peer end determines, according to the second result notification information, whether the service that needs to be discovered by the peer end exists at the local end.

According to a fifth aspect, a service information discovery device is provided and includes:
a sending unit (71), configured to send a first query request message, wherein the first query request message carries a first hash value, wherein the first hash value is obtained by performing a first hash operation on service identity information of a service to be discovered;
a receiving unit (72), configured to receive a first query response message sent by a service information providing device, wherein the first query response message carries first result notification information, wherein the first result notification information is used to identify whether a service of which a hash value obtained by performing the first hash operation is the first hash value exists at the service information providing device; and
a discovery processing unit (73), configured to determine, according to at least the first result notification information, whether the service to be discovered exists at the service information providing device;
characterized in that the first result notification information comprises at least one second hash value, wherein the second hash value is obtained by the service information providing device by performing a second hash operation on service identity information of at least one service of which the hash value obtained by performing the first hash operation is the first hash value; and
the discovery processing unit (73) comprises:
   an obtaining module (735), configured to perform the second hash operation on the service identity information of the service to be discovered, and obtain the second hash value corresponding to the service to be discovered; and
   a third determining module (736), configured to determine, when the second hash value corresponding to the service to be discovered exists in the first result notification information, that the service to be discovered exists at the service information providing device.

According to the fifth aspect, in a first possible implementation manner of the fifth aspect, the first result notification information is existence indication information used to indicate that the service of which the hash value obtained by performing the first hash operation is the first hash value exists at the peer end; and
the discovery processing unit includes:
a sending module, configured to send a second query request message to the peer end according to the existence indication information, where the second query request message carries the service identity information of the service to be discovered;
a receiving module, configured to receive a second query response message returned by the peer end, where the second query response message carries second result notification information, and the second result notification information is used to identify whether the service to be discovered exists at the peer end; and
a first determining module, configured to determine, when the second result notification information identifies that the service to be discovered exists at the peer end, that the service to be discovered exists at the peer end.

According to the fifth aspect, in a second possible implementation manner of the fifth aspect, the first result notification information is a second hash value, where the second hash value is obtained by the peer end by performing a second hash operation on service identity information of the service of which the hash value obtained by performing the first hash operation is the first hash value; and
the discovery processing unit includes:
an obtaining module, configured to perform the second hash operation on the service identity information of the service to be discovered, and obtain the second hash value corresponding to the service to be discovered; and
a third determining module, configured to determine, when the second hash value corresponding to the service to be discovered exists in the first query response message, that the service to be discovered exists at the peer end.

According to the second possible implementation manner of the fifth aspect, in a third possible implementation manner of the fifth aspect, a bit length of the second hash operation is greater than a bit length of the first hash operation.

According to the fifth aspect, in a fourth possible implementation manner of the fifth aspect, the first result notification information is service identity information of the service of which the hash value obtained by performing the first hash operation is the first hash value; and
the discovery processing unit includes:
a fourth determining module, configured to determine, when the service identity information of the service to be discovered exists in the first query response message, that the service to be discovered exists at the peer end.

According to a sixth aspect, a service information providing device is provided and includes:
a first receiving unit (1001), configured to receive a first query request message, wherein the first query request message carries a first hash value, wherein the first hash value is obtained, by performing a first hash operation on service identity information of a service to be discovered, by a service information discovery device that sends the first query request message; and
a first sending unit (1002), configured to send a first query response message, wherein the first query response message carries first result notification information, so that the service information discovery device determines, according to at least the first result notification information, whether the service to be discovered exists at the service information providing device , wherein the first result notification information is used to identify whether a service of which a hash value obtained by performing the first hash operation is the first hash value exists at the service information providing device;
wherein the first sending unit (1002) comprises:
   a second determining module (10023), configured to determine, according to the first hash value, whether the service of which the hash value obtained by performing the first hash operation is the first hash value exists at the service information providing device; characterized by
   an obtaining module (10024), configured to obtain, when the second determining module determines that the service of which the hash value obtained by performing the first hash operation is the first hash value exists at the service information providing device, a second hash value corresponding to the service of which the hash value obtained by performing the first hash operation is the first hash value, wherein the second hash value is obtained by performing a second hash operation on service identity information of the service of which the hash value obtained by performing the first hash operation is the first hash value; and
   a second sending module (10025), configured to encapsulate the second hash value corresponding to the service of which the hash value obtained by performing the first hash operation is the first hash value, into the first query response message as the first result notification information, and send the first query response message to the service information discovery device.

According to the sixth aspect, in a first possible implementation manner of the sixth aspect, the first sending unit includes:
a first determining module, configured to determine, according to the first hash value, whether the service of which the hash value obtained by performing the first hash operation is the first hash value exists at the local end; and
a first sending module, configured to encapsulate, when the first determining module determines that the service of which the hash value obtained by performing the first hash operation is the first hash value exists at the local end, existence indication information into the first query response message as the first result notification information, and send the first query response message to the peer end, where the existence indication information is used to identify that the service of which the hash value obtained by performing the first hash operation is the first hash value exists at the local end.

According to the first possible implementation manner of the sixth aspect, in a second possible implementation manner of the sixth aspect, the device further includes: a second receiving unit, configured to receive a second query request message sent by the peer end according to the existence indication information, where the second query request message carries the service identity information of the service to be discovered; and
a second sending unit, configured to send a second query response message to the peer end, where the second query response message carries second
result notification information, so that the peer end determines, according to the second result notification information, whether the service to be discovered exists at the local end, where the second result notification information is used to identify whether the service to be discovered exists at the local end.

According to the sixth aspect, in a third possible implementation manner of the sixth aspect, the first sending unit includes:
a second determining module, configured to determine, according to the first hash value, whether the service of which the hash value obtained by performing the first hash operation is the first hash value exists at the local end; and
an obtaining module, configured to obtain, when the second determining module determines that the service of which the hash value obtained by performing the first hash operation is the first hash value exists at the local end, a second hash value corresponding to the service of which the hash value obtained by performing the first hash operation is the first hash value, where the second hash value is obtained by performing a second hash operation on service identity information of the service of which the hash value obtained by performing the first hash operation is the first hash value; and
a second sending module, configured to encapsulate the second hash value corresponding to the service of which the hash value obtained by performing the first hash operation is the first hash value, into the first query response message as the first result notification information, and send the first query response message to the peer end.

According to the third possible implementation manner of the sixth aspect, in a fourth possible implementation manner of the sixth aspect, a bit length of the second hash operation is greater than a bit length of the first hash operation.

According to the sixth aspect, in a fifth possible implementation manner of the sixth aspect, the first sending unit includes:
a third determining module, configured to determine, according to the first hash value, whether the service of which the hash value obtained by performing the first hash operation is the first hash value exists at the local end; and
a third sending module, configured to encapsulate, when the third determining module determines that the service of which the hash value obtained by performing the first hash operation is the first hash value exists at the local end, service identity information of the service of which the hash value obtained by performing the first hash operation is the first hash value, into the first query response message as the first result notification information, and send the first query response message to the peer end.

According to a seventh aspect, a service information discovery device is provided and includes:
a receiving unit, configured to receive a service information indication message, where the service information indication message carries hash value indication information, and the hash value indication information is used to identify hash values obtained according to service identity information of services which exist at a peer end that sends the service information indication message; and
a discovery processing unit, configured to determine, according to at least the hash value indication information, whether a service that needs to be discovered by a local end exists at the peer end.

According to the seventh aspect, in a first possible implementation manner of the seventh aspect, the discovery processing unit includes:
an obtaining module, configured to obtain a first hash value corresponding to the service that needs to be discovered by the local end, where the first hash value is obtained by performing a first hash operation on service identity information of the service that needs to be discovered by the local end; and
a determining module, configured to determine, according to at least whether the first hash value exists in the hash values identified by the hash value indication information, whether the service that needs to be discovered by the local end exists at the peer end.

According to the first possible implementation manner of the seventh aspect, in a second possible implementation manner of the seventh aspect, the determining module includes:
a first sending submodule, configured to send a first query request message to the peer end when the first hash value exists in the hash values identified by the hash value indication information, where the first query request message carries the service identity information of the service that needs to be discovered by the local end;
a first receiving submodule, configured to receive a first query response message sent by the peer end, where the first query response message carries first result notification information, where the first result notification information is used to identify whether the service that needs to be discovered by the local end exists at the peer end; and
a first determining submodule, configured to determine, when the first result notification information identifies that the service that needs to be discovered by the local end exists at the peer end, that the service that needs to be discovered by the local end exists at the peer end.

According to the first possible implementation manner of the seventh aspect, in a third possible implementation manner of the seventh aspect, the determining module includes:
a second sending submodule, configured to send a second query request message to the peer end when the first hash value exists in the hash values identified by the hash value indication information, where the second query request message carries the first hash value and a second hash value corresponding to the service that needs to be discovered by the local end, where the second hash value corresponding to the service that needs to be discovered by the local end is obtained by performing a second hash operation on the service identity information of the service that needs to be discovered by the local end;
a second receiving submodule, configured to receive a second query response message sent by the peer end, where the second query response message carries second result notification information, and the second result notification information is used to identify whether a service of which a hash value obtained by performing the second hash operation is the same as the second hash value corresponding to the service that needs to be discovered by the local end, exists in services of which the hash value obtained by performing the first hash operation is the first hash value at the peer end; and
a second determining submodule, configured to determine, when the second result notification information identifies that the service of which the hash value obtained by performing the second hash operation is the same as the second hash value corresponding to the service that needs to be discovered by the local end, exists in the services of which the hash value obtained by performing the first hash operation is the first hash value at the peer end, that the service that needs to be discovered by the local end exists at the peer end.

According to an eighth aspect, a service information providing device is provided and includes:
an obtaining unit, configured to obtain hash values corresponding to services that exist at a local end, where the hash values are obtained by performing a first hash operation on service identity information of the services that exist at the local end; and
a broadcasting unit, configured to broadcast a service information indication message, where the service information indication message carries hash value indication information, so that a peer end that receives the service information indication message determines, according to at least the hash value indication information, whether a service that needs to be discovered by the peer end exists at the local end, where the hash value indication information is used to identify the hash values corresponding to the services that exist at the local end.

According to the eighth aspect, in a first possible implementation manner of the eighth aspect, the broadcasting unit includes:
a determining module, configured to determine a bit table length according to a quantity of the services that exist at the local end; and
a setting and broadcasting module, configured to encapsulate a bit table and the bit table length into the service information indication message, and set positions corresponding to the hash values corresponding to the services that exist at the local end to 1, and then broadcast the service information indication message.

According to the eighth aspect or the first possible implementation manner of the eighth aspect, in a second possible implementation manner of the eighth aspect, the device may further include:
a first receiving unit, configured to receive a first query request message sent by the peer end, where the first query request message carries service identity information of the service that needs to be discovered by the peer end; and
a first sending unit, configured to send a first query response message to the peer end according to the service identity information of the service that needs to be discovered by the peer end, where the first query response message carries first result notification information, and the first result notification information is used to identify whether the service that needs to be discovered by the peer end exists at the local end, so that the peer end determines, according to at least the first result notification information, whether the service that needs to be discovered by the peer end exists at the local end.

According to the eighth aspect or the first possible implementation manner of the eighth aspect, in a third possible implementation manner of the eighth aspect, the device may further include:
a second receiving unit, configured to receive a second query request message sent by the peer end, where the second query request message carries a first hash value corresponding to the service that needs to be discovered by the peer end and a second hash value corresponding to the service that needs to be discovered by the peer end, where the first hash value and second hash value corresponding to the service that needs to be discovered by the peer end are obtained by respectively performing the first hash operation and a second hash operation on service identity information of the service that needs to be discovered by the peer end; and
a second sending unit, configured to send a second query response message to the peer end according to the first hash value and second hash value, where the second query response message carries second result notification information, and the second result notification information is used to identify whether a service of which a hash value obtained by performing the second hash operation is the same as the second hash value, exists in services of which the hash value obtained by performing the first hash operation is the first hash value at the local end, so that the peer end determines, according to the second result notification information, whether the service that needs to be discovered by the peer end exists at the local end.

In the foregoing technical solutions, complete service identity information of a service is not directly used in a service discovery process, but a hash value that is obtained according to service identity information of the service is used to identify the service that needs to be discovered or the service that can be provided. Because a length of the hash value is far less than that of the complete service identity information of the service, a length of a query request message or a service information indication message is reduced in the service discovery process, and channel resources occupied by those messages is reduced, which helps to improve utilization of channel resources.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of a service information discovery method according to an embodiment of the present invention;
FIG. 2 is a flowchart of a service information discovery method according to another embodiment of the present invention;
FIG. 3 is a flowchart of a service information discovery method according to still another embodiment of the present invention;
FIG. 4 is a flowchart of a service information discovery method according to still another embodiment of the present invention;
FIG. 5 is a flowchart of a service information discovery method according to still another embodiment of the present invention;
FIG. 6 is a flowchart of a service information discovery method according to still another embodiment of the present invention;
FIG. 7 is a schematic structural diagram of a service information discovery device according to an embodiment of the present invention;
FIG. 8 is a schematic structural diagram of a service information discovery device according to another embodiment of the present invention;
FIG. 9 is a schematic structural diagram of a service information discovery device according to still another embodiment of the present invention;
FIG. 10 is a schematic structural diagram of a service information providing device according to an embodiment of the present invention;
FIG. 11 is a schematic structural diagram of a service information providing device according to another embodiment of the present invention;
FIG. 12 is a schematic structural diagram of a service information providing device according to still another embodiment of the present invention;
FIG. 13 is a schematic structural diagram of a service information discovery device according to still another embodiment of the present invention;
FIG. 14 is a schematic structural diagram of a service information discovery device according to still another embodiment of the present invention;
FIG. 15 is a schematic structural diagram of a service information discovery device according to still another embodiment of the present invention;
FIG. 16 is a schematic structural diagram of a service information providing device according to still another embodiment of the present invention;
FIG. 17 is a schematic structural diagram of a service information providing device according to still another embodiment of the present invention; and
FIG. 18 is a schematic structural diagram of a service information providing device according to still another embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In an existing WiFi network, because a neighboring device does not necessarily have a required service, in many cases, a query request message is wasted; furthermore, the query request message carries complete service identity information, and the service identity information is generally long, which occupies precious channel resources in vain, resulting in a waste of the channel resources and lower utilization of the channel resources. Alternatively, because a service provided by a device is not necessarily required by a neighboring device, in many cases, a broadcast service information indication message is wasted, and the service information indication message carries complete service identity information, and the service identity information is generally long, which occupies precious channel resources in vain, resulting in a waste of the channel resources and lower utilization of the channel resources. Regarding a problem of a waste and low utilization of channel resources in the prior art, the following embodiments of the present invention provide different solutions.

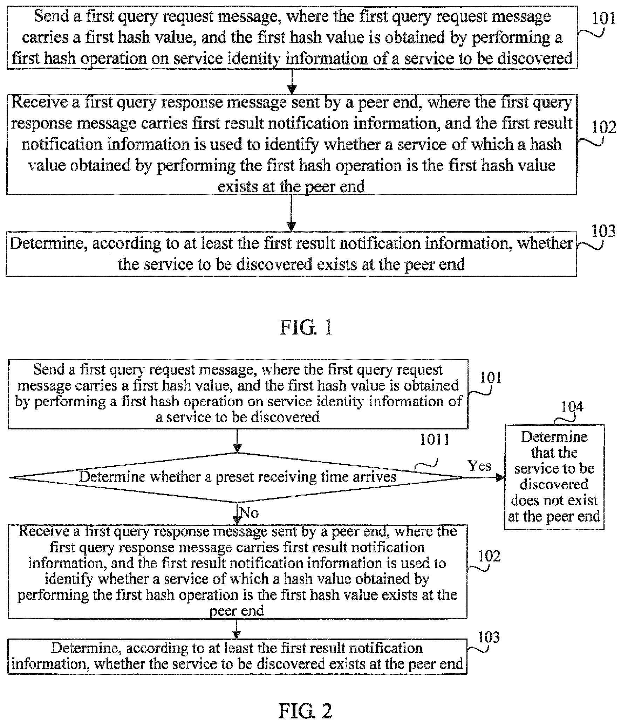

FIG. 1 is a flowchart of a service information discovery method according to an embodiment of the present invention. As shown in FIG. 1, the method in this embodiment includes:
Step 101: Send a first query request message, where the first query request message carries a first hash value, and the first hash value is obtained by performing a first hash operation on service identity information of a service to be discovered.
Step 102: Receive a first query response message sent by a peer end, where the first query response message carries first result notification information, and the first result notification information is used to identify whether a service of which a hash value obtained by performing the first hash operation is the first hash value exists at the peer end.
Step 103: Determine, according to at least the first result notification information, whether the service to be discovered exists at the peer end.

In this embodiment, a local end actively sends a query request message, which carries a first hash value obtained by performing a first hash operation on service identity information of a service to be discovered, and actively discovers the required service. Herein the service that needs to be discovered by the local end is referred to as a service to be discovered. The local end may be a STA. The peer end may be an AP or another STA. To distinguish from a query request message sent again subsequently, herein the query request message is referred to as a first query request message.

In this embodiment, the service refers to a function or information provided by an AP or a STA for another STA. Each service has its own unique identity, which is referred to as service identity information, where the service identity information may uniquely identify a service. Service identity information of a service may mainly include a name of the service, and in addition, may further include a protocol name or a version number, or include specific information, for example, information indicating a two-player game or a multiplayer game, or an identity (Identity, ID for short). For example, an AP can provide an IP connection service, where the service is named WANIPConnection by a Universal Plug and Play (Universal Plug and Play, UPnP for short) protocol. For another example, for a printer with an AP, where the AP indicates that the printer provides a print service, the service is named PrintBasic by the UPnP protocol. In addition to the UPnP protocol, there may be other protocols, such as zero-configuration networking (Bonjour), which are used to define names of involved services. Bonjour can automatically discover a computer, a device, and a service on an IP network. For another example, a service is a connection providing a game, and a name of the service may adopt a name of the game, for example, a name of a service providing a connection function of a game Gamel maybe called Gamel.

Generally, the service identity information of the service is long. If the first query request message directly carries the service identity information of the service to be discovered, the first query request message is large, and consequently, the first query request message occupies a lot of channel resources, causing a waste of the channel resources. In this embodiment, the local end obtains the first hash value by performing the first hash (hash) operation on the service identity information of the service to be discovered. Hash is converting an input of any length into an output of a fixed length by using a hash algorithm, where the output is a hash value; the conversion is a kind of compressed mapping, that is, a length of the hash value is generally far less than the length of the input. Simply, the hash operation is a function for compressing an input of any length into an output of a fixed length. As seen above, the local end uses the service identity information of the service to be discovered as an input, and converts the input into an output of a fixed length by using a hash algorithm, namely, the first hash value, where a length of the first hash value is less than a length of the service identity information of the service to be discovered. As may be seen, compared with carrying the complete service identity information in the first query request message, carrying the first hash value may save the channel resources and improve utilization of the channel resources.

It should be noted herein that bits (namely, a length) of a hash operation result may be preset. According to different hash operation result lengths, hash operations may be classified into multiple types, for example, a 16-bit hash operation, a 32-bit hash operation, and a 128-bit hash operation. In this embodiment, as long as the local end and the peer end determine to use a hash operation of same bits, the hash operation of specific bits is not limited.

Optionally, the first query request message sent by the local end may be sent in broadcast mode, for example, the local end broadcasts a probe request (probe request) message, and the peer end may return a unicast or broadcast probe response (probe response) message, or the peer end may return nothing.

Optionally, the first query request message sent by the local end may also be sent in unicast mode, for example, the local end may send a generic advertisement service (Generic Advertisement Service, GAS for short) initial request (GAS initial request) message, and the peer end may return a unicast or broadcast response message, for example, a GAS initial response (GAS initial response) message.

The first query request message is not limited to the GAS initial request message or probe request message. Correspondingly, the first query response message is not limited to the GAS initial response message or probe response message either.

After the local end sends the first query request message, the peer end receives the first query request message. Content returned by the peer end varies according to different specific situations. If the service of which the hash value obtained by performing the first hash operation is the first hash value exists at the peer end, the peer end may return a response message indicating that the service of which the hash value obtained by performing the first hash operation is the first hash value exists at the peer end; if the service of which the hash value obtained by performing the first hash operation is the first hash value does not exist at the peer end, the peer end may return a response message indicating that the service of which the hash value obtained by performing the first hash operation is the first hash value does not exist at the peer end, and in this case, it means that the service to be discovered by the local end does not exist at the peer end. Based on this, after the peer end determines whether the service of which the hash value obtained by performing the first hash operation is the first hash value exists, the peer end returns the first query response message that carries the first result notification information, where the first result notification information is used to identify whether the service of which the hash value obtained by performing the first hash operation is the first hash value exists at the peer end.

The local end receives the first query response message sent by the peer end, and obtains the first result notification information from the first query response message; and then determines, according to at least the first result notification information, whether the service to be discovered by the local end exists at the peer end.

In an actual application, many STAs may continuously send query request messages to a neighboring device, attempting to find whether the neighboring device has a service that needs to be discovered by the STAs. However, in many cases, the neighboring device may not have the service that needs to be discovered by the STAs, and the query request messages are wasted, but the query request message in this embodiment is shortened by carrying a short hash value, and thereby the query request messages that are wasted in many cases are shortened. As a result, this helps to reduce the waste of the channel resources and further helps to improve utilization of radio resources.

In conclusion, in this embodiment, the local end actively sends a query request message, and finds whether a service that needs to be discovered by the local end exists in a neighboring device. In this process, by carrying a short hash value of service identity information in the query request message instead of directly carrying the service identity information of the service to be discovered, the length of the query request message is reduced, which helps to reduce channel resources occupied by the query request message, and helps to save the channel resources; on the other hand, in a case in which the query request message is wasted, the length of the query request message is reduced, which is equivalent to shortening the wasted query request message, and therefore also helps to reduce the waste of the channel resources, and also helps to improve utilization of radio resources.

In the following implementation manner, it is assumed that the local end requires a service, and that service identity information of the service is "bonjour: printer._ipp._tcp.local". The identity information of the service is only an example, and bonjour is a protocol field corresponding to the last service name printer._ipp._tcp.local. "bonjour" in the service identity information is only a protocol used for distinguishing naming, and in an actual application, this keyword may also be not carried.

The local end itself first calculates a hash value corresponding to the service identity information of the service. A calculation method may be using the service identity information of the service as an input, and performing calculation by using a predefined first hash function. Bits of a hash result may be preset bits, for example, 16 bits, 32 bits, and 128 bits. We may use H16() to indicate a 16-bit hash function, and H32() to indicate a 32-bit hash function. In this implementation manner, it is assumed that a 16-bit hash operation is used, where a maximum value that 16 bits can express is 2¹⁶-1=65535, that is, can express 0-65535, namely, 65536 values in total. Herein the local end first calculates the 16-bit hash value. Assuming H16("bonjour: printer._ipp._tcp.local")=25568, where 25568 is the first hash value, the local end adds the hash result 25568 in the first query request message to be sent to the peer end. Optionally, the local end may further carry, in the first query request message, how many bits of the hash value that the local end calculates, for example, carry 16 herein, which indicates a 16-bit hash operation. Optionally, the local end may further carry, in the first query request message, a quantity of services that need to be discovered by the local end, for example, if the local end needs to discover 1 service, information of the 1 service to be discovered may be carried. For example, information carried in the first query request message may include: service: 16, 1, 25568, which indicates that: the hash algorithm of the service to be discovered is a 16-bit algorithm, 1 service needs to be discovered, and the hash value of the service is 25568.

After receiving the first query request message, the peer end first determines whether the peer end has a service of which a hash value obtained after the 16-bit hash operation is 25568. According to different determining results, meanings identified by the first result notification information carried in the first query response message returned by the peer end are also different, and specific implementation is also different. The following describes an implementation manner of the first result notification information by using an example.

In an optional implementation manner, the peer end finds that the peer end itself in deed has the service of which the hash value obtained by performing the first hash operation is the first hash value (for example, 25568), and therefore may use existence indication information as the first result notification information, and return the first result notification information to the local end by using the first query response message, for example, by using a bit carrying 1 in the first query response message. Based on this, the first result notification information is the existence indication information used to indicate that the service of which the hash value obtained by performing the first hash operation is the first hash value exists at the peer end. Therefore, an implementation manner of determining, by the local end according to at least the first result notification information, whether the service to be discovered by the local end exists at the peer end, includes: directly determining, by the local end according to the existence indication information, that the service to be discovered by the local end exists at the peer end.

Because a characteristic of the hash operation is that a same hash output may be obtained from different inputs. That is, hash values are the same, but inputs respectively corresponding to the two same hash values may be different. That is, after a same hash operation is performed on service identity information of two different services, hash values of the service identity information of the two different services may be the same. Consequently, an incorrect service may be discovered by only comparing whether the hash values are the same, which is used as a condition for determining whether the service to be discovered exists at the peer end. In a case in which the first result notification information is the existence indication information, to discover a correct service, another implementation manner of determining, by the local end according to at least the first result notification information, whether the service to be discovered by the local end exists at the peer end, may include the following steps:
Step 1a: Send a second query request message to the peer end according to the existence indication information, where the second query request message carries the service identity information of the service to be discovered.
Step 1b: Receive a second query response message returned by the peer end, where the second query response message carries second result notification information, where the second result notification information is used to identify whether the service to be discovered exists at the peer end.
Step 1c: If the second result notification information identifies that the service to be discovered exists at the peer end, determine that the service to be discovered exists at the peer end; if the second result notification information identifies that the service to be discovered does not exist at the peer end, determine that the service to be discovered does not exist at the peer end.

In this implementation manner, after the local end knows that the service of which the hash value obtained by performing the first hash operation is the first hash value (for example, 25568) exists at the peer end, the local end may query the peer end again by using the second query request message that carries the complete service identity information of the service to be discovered, for example, bonjour: printer._ipp._tcp.local, so as to further determine whether the peer end has the service that needs to be discovered by the local end, which may improve accuracy and a success rate of discovering the service that needs to be discovered. In this implementation manner, the determining, by the local end according to at least the first result notification information, whether the service to be discovered by the local end exists at the peer end, is specifically determining, according to the first result notification information and second result notification information, whether the service to be discovered by the local end exists at the peer end. Although the local end needs to perform two query processes in this embodiment, there are a small quantity of second query request messages, and because the message length of the first query request message is reduced, occupancy of channel resources by a large quantity of first query request messages is reduced, which, as a whole, may reduce a waste of channel resources, and help to improve utilization of the channel resources.

In an optional implementation manner, the peer end finds that the service of which the hash value obtained by performing the first hash operation is the first hash value (for example, 25568) does not exist at the peer end itself, and therefore may use nonexistence indication information as the first result notification information, and return the first result notification information to the local end by using the first query response message, for example, by using a bit carrying 0 in the first query response message. In this case, an implementation manner of determining, by the local end according to at least the first result notification information, whether the service to be discovered exists at the peer end, includes: directly determining, by the local end according to the nonexistence indication information, that the service to be discovered does not exist at the peer end. Optionally, the peer end may return the first query response message carrying the nonexistence indication information, or does not respond to the first query request message. In this way, if the local end does not receive the first query response message within a specified receiving time, the local end may directly determine that the service to be discovered does not exist at the peer end.

In an optional implementation manner, after receiving the first query request message, the peer end finds that the service of which the hash value obtained by performing the first hash operation is the first hash value (for example, 25568) exists at the peer end itself in deed. Therefore, the peer end may directly use the service identity information of the service of which the hash value is 25568 as the first result notification information, and return the first result notification information to the local end by using the first query response message. Based on this, the first result notification information may be the service identity information of the service of which the hash value obtained by performing the first hash operation is the first hash value, for example, "bonjour: printer._ipp._tcp.local". That is, the first query response message carries the service identity information of the service of which the hash value obtained by performing the first hash operation is the first hash value, for example, 25568. Based on this, an implementation manner of determining, by the local end according to at least the first result notification information, whether the service to be discovered exists at the peer end, includes: determining, by the local end, whether the service identity information of the service to be discovered exists in the first query response message; if the service identity information of the service to be discovered exists in the first query response message, determining that the service to be discovered exists at the peer end; and if the service identity information of the service to be discovered does not exist in the first query response message, determining that the service to be discovered does not exist at the peer end.

It should be noted herein that the implementation manner of carrying, in the first query response message, the service identity information of the service of which the hash value obtained by performing the first hash operation is the first hash value, may be applied to a case in which a small quantity of services of which the hash value obtained by performing the first hash operation is the first hash value exist at the peer end. Herein the small quantity may be less than a preset quantity threshold, where the quantity threshold may be set freely according to an actual application situation. For example, if only one service of which the hash value obtained by performing the first hash operation is the first hash value exists at the peer end, service identity information of the service may be directly encapsulated into the first query response message as the first result notification information, and returned to the local end.

In an optional implementation manner, after receiving the first query request message, if the peer end finds that the service of which the hash value obtained by performing the first hash operation is the first hash value (for example, 25568) exists at the peer end itself, the peer end may perform a second hash operation on the service identity information of the service of which the hash value obtained by performing the first hash operation is the first hash value to obtain a second hash value. Herein bit lengths of the first hash operation and second hash operation may be different, and a bit length of the second hash operation may be greater than a bit length of the first hash operation. Then, the peer end uses the second hash value (for example, a 32-bit hash value 127665) corresponding to the service of which the hash value obtained by performing the first hash operation is the first hash value (for example, 25568) as the first result notification information, and returns the first result notification information to the local end by using the first query response message. For example, if the first hash operation is a 16-bit hash operation, the first hash value is a 16-bit hash value, and therefore the second hash operation may be a 32-bit hash operation, and the second hash value is a 32-bit hash value, or the second hash operation may be a 128-bit hash operation, and the second hash value is a 128-bit hash value. Based on this, the first result notification information may be the second hash value corresponding to the service of which the hash value obtained by performing the first hash operation is the first hash value (for example, 25568). Therefore, an implementation manner of determining, by the local end according to at least the first result notification information, whether the service to be discovered exists at the peer end, includes the following steps:
Step 2a: Perform the second hash operation on the service identity information of the service to be discovered, and obtain the second hash value corresponding to the service to be discovered.
Step 2b: If the second hash value corresponding to the service to be discovered exists in the first query response message, determine that the service to be discovered exists at the peer end; if the second hash value corresponding to the service to be discovered does not exist in the first query response message, determine that the service to be discovered does not exist at the peer end.

Specifically, the first query response message returned by the peer end carries the second hash value corresponding to the service of which the hash value obtained by performing the first hash operation is the first hash value. After receiving the first query response message, the local end may use the hash operation same as the peer end to perform the second hash operation on the service identity information of the service to be discovered and obtain the second hash value corresponding to the service to be discovered; then, determine whether the second hash value corresponding to the service to be discovered exists in the first query response message; if the second hash value corresponding to the service to be discovered does not exist in the first query response message, directly determine that the service to be discovered does not exist at the peer end; and if the second hash value corresponding to the service to be discovered exists in the first query response message, directly determine that the service to be discovered exists at the peer end, and directly attempt to use the service. Generally, a probability that both hash operation results of different inputs are the same is small. Therefore, if two types of hash operation results are the same, it may indicate that the two services are the same service. The accuracy of discovering a correct service to be discovered is improved by performing two types of hash operations on the service identity information of the service to be discovered.

Optionally, although the probability that both hash operation results of different inputs are the same is small, to further reduce the probability that the local end discovers an incorrect service, after the local end determines that the second hash value corresponding to the service to be discovered exists in the first query response message, the local end may further query the peer end again by using a message that carries the complete service identity information of the service to be discovered, so as to further reduce the probability of discovering an incorrect service.

Based on the foregoing embodiment or each implementation manner, in an optional implementation manner, as shown in FIG. 2, before step 102, the method in this embodiment may include:
Step 1011: Determine whether a preset receiving time arrives; and if a determining result is no, that is, the preset receiving time does not arrive, perform step 102; or if a determining result is yes, perform step 104.
Step 104: Determine that the service to be discovered does not exist at the peer end.

In this implementation manner, by setting the receiving time, the first query response message returned by the peer end is received within the receiving time; if the preset receiving time expires, it is directly determined that the service to be discovered does not exist at the peer end. Based on this, this implementation manner supports making no response in a case in which the peer end determines that the service of which the hash value obtained by performing the first hash operation is the first hash value does not exist, which may further save channel resources occupied by the first query response message and help to improve utilization of the channel resources.

It should be noted herein that when the local end queries the peer end for service information, the local end may query for multiple pieces of service information simultaneously. In this case, the first query request message sent by the local end to the peer end may carry the first hash value obtained by performing the first hash operation on each piece of service identity information, and in the first query response message returned by the peer end, responses may be made separately according to whether the first hash value of each piece of service identity information exists, where it is possible that: all first hash values exist, or none of the first hash value exists, or a part of the first hash values exist and a part of the first hash value do not exist. There may be one or more first query response messages (that is, a message may be returned separately for each service queried by the local end) returned by the peer end; the first result notification information carried in the first query response message returned by the peer end may be information about whether the first hash value exists, or may also be the service identity information of the service corresponding to the existent first hash value, or may also be the second hash value of the service identity information of the service corresponding to the existent first hash value, so that the local end further determines whether the service to be discovered exists at the peer end. For details, reference may be made to the description of the foregoing embodiment, and no further description is provided herein.

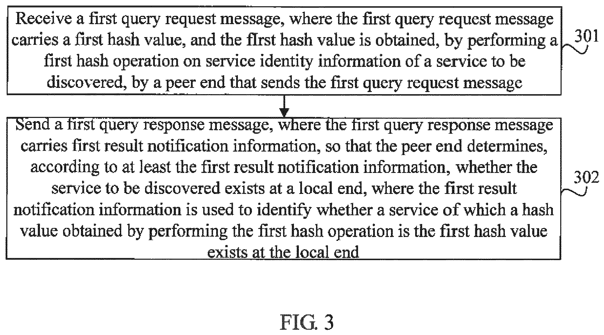

FIG. 3 is a flowchart of a service information discovery method according to still another embodiment of the present invention. As shown in FIG. 3, the method in this embodiment includes:
Step 301: Receive a first query request message, where the first query request message carries a first hash value, where the first hash value is obtained, by performing a first hash operation on service identity information of a service to be discovered, by a peer end that sends the first query request message.
Step 302: Send a first query response message, where the first query response message carries first result notification information, so that the peer end determines, according to at least the first result notification information, whether the service to be discovered exists at a local end, where the first result notification information is used to identify whether a service of which a hash value obtained by performing the first hash operation is the first hash value exists at the local end.

In this embodiment, the peer end may be a STA, and the local end may be a STA or an AP. The peer end actively sends the first query request message, and carries, in the first query request message, the first hash value that is obtained by performing the first hash operation on the service identity information of the service to be discovered, so as to identify the service to be discovered. The local end receives the first query request message sent by the peer end, obtains the first hash value from the first query request message, then determines whether the service of which the hash value obtained by performing the first hash operation is the first hash value exists at the local end, and returns a determining result as the first result notification information to the peer end by using the first query response message. Thereby, after receiving the first result notification information, the peer end determines, according to at least the first result notification information, whether the service to be discovered exists at the local end. For the process of determining, by the peer end according to at least the first result notification information, whether the service to be discovered exists at the local end, reference may be made to the description in the embodiment shown in FIG. 1 or FIG. 2. A difference lies in that the "peer end" in this embodiment is the "local end" in the embodiment shown in FIG. 1 or FIG. 2. Other descriptions are not repeated herein.

In an optional implementation manner, an implementation manner of sending the first query response message by the local end includes the following steps:
Step 3a: Determine, according to the first hash value, whether the service of which the hash value obtained by performing the first hash operation is the first hash value exists at the local end; and if a determining result is yes, that is, it is determined that the service of which the hash value obtained by performing the first hash operation is the first hash value exists at the local end, perform step 3b; or if a determining result is no, that is, it is determined that the service of which the hash value obtained by performing the first hash operation is the first hash value does not exist at the local end, perform step 3c.
Step 3b: Encapsulate existence indication information into the first query response message as the first result notification information, and send the first query response message to the peer end, where the existence indication information is used to identify that the service of which the hash value obtained by performing the first hash operation is the first hash value exists at the local end.
Step 3c: Encapsulate nonexistence indication information into the first query response message as the first result notification information, and send the first query response message to the peer end, where the nonexistence indication information is used to identify that the service of which the hash value obtained by performing the first hash operation is the first hash value does not exist at the local end.

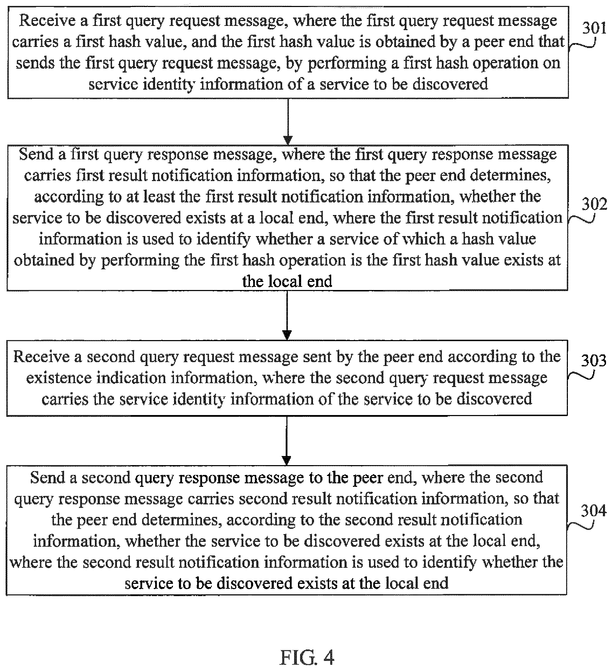

In this implementation manner, in a case in which the first result notification information is the existence indication information, as shown in FIG. 4, after step 302, the method in this embodiment may further include:
Step 303: Receive a second query request message sent by the peer end according to the existence indication information, where the second query request message carries the service identity information of the service to be discovered.
Step 304: Send a second query response message to the peer end, where the second query response message carries second result notification information, so that the peer end determines, according to the second result notification information, whether the service to be discovered exists at the local end, where the second result notification information is used to identify whether the service to be discovered exists at the local end.

The foregoing step 303 and step 304 describe a process in which the local end receives the query request message that is sent by the peer end again and carries the service identity information of the service to be discovered, and returns the second query response message that carries information about whether the service to be discovered exists to the peer end, in a case in which the first result notification information is the existence indication information.

The foregoing process is not further described herein. For details, reference may be made to the corresponding description in the embodiment shown in FIG. 1.

In an optional implementation manner, an implementation manner of sending the first query response message by the local end includes: determining, by the local end according to the first hash value, whether the service of which the hash value obtained by performing the first hash operation is the first hash value exists at the local end; and if a determining result is yes, that is, it is determined that the service of which the hash value obtained by performing the first hash operation is the first hash value exists at the local end, encapsulating the service identity information of the service of which the hash value obtained by performing the first hash operation is the first hash value, into the first query response message as the first result notification information, and sending the first query response message to the peer end. Optionally, if the determining result is no, that is, it is determined that the service of which the hash value obtained by performing the first hash operation is the first hash value does not exist at the local end, the local end may make no response, or may return the nonexistence indication information and so on.

In an optional implementation manner, an implementation manner of sending the first query response message by the local end includes:
Step 4a: Determine, according to the first hash value, whether the service of which the hash value obtained by performing the first hash operation is the first hash value exists at the local end; and if a determining result is yes, that is, it is determined that the service of which the hash value obtained by performing the first hash operation is the first hash value exists at the local end, perform step 4b; or if a determining result is no, that is, it is determined that the service of which the hash value obtained by performing the first hash operation is the first hash value does not exist at the local end, the local end may make no response, or may return the nonexistence indication information and so on.
Step 4b: Obtain a second hash value corresponding to the service of which the hash value obtained by performing the first hash operation is the first hash value, and perform step 4c. The hash value of the first hash operation is the second hash value corresponding to the service of the first hash value, and is obtained by performing a second hash operation on the service identity information of the service of which the hash value obtained by performing the first hash operation is the first hash value.
Step 4c: Encapsulate the second hash value corresponding to the service of which the hash value obtained by performing the first hash operation is the first hash value, into the first query response message as the first result notification information, and send the first query response message to the peer end.

In this implementation manner, a hash operation corresponding to the first hash value at the local end is referred to as the first hash operation; and the second hash operation is a hash operation different from the first hash operation. Bit lengths of the first hash value and second hash value may be different, and a bit length of the second hash operation may be greater than a bit length of the first hash operation. For example, if the first hash value is 16 bits, the second hash value may be a 32-bit or 128-bit hash value. Specifically, the local end may perform the second hash operation on the service identity information of the service of which the hash value obtained by performing the first hash operation is the first hash value, obtain the second hash value corresponding to the service, then encapsulate the second hash value of the service into the first query response message as the first result notification information, and send the first query response message to the peer end.

The method provided by this embodiment is corresponding to the foregoing method provided by FIG. 1 or FIG. 2, and is described from a different perspective. For details about each operation in this embodiment, reference may be made to the description of the embodiment shown in FIG. 1 or FIG. 2, and no further description is provided herein.

In this embodiment, the local end cooperates with the peer end, so that the peer end may carry, in a query request message, a short hash value of service identity information instead of directly carrying service identity information of a service to be discovered, which reduces the length of the query request message, helps to reduce occupancy of channel resources by the query request message, and helps to save the channel resources; on the other hand, in a case in which the query request message is wasted, the length of the query request message is reduced, which is equivalent to shortening the wasted query request message, and therefore also helps to reduce the waste of the channel resources, and also helps to improve utilization of radio resources.

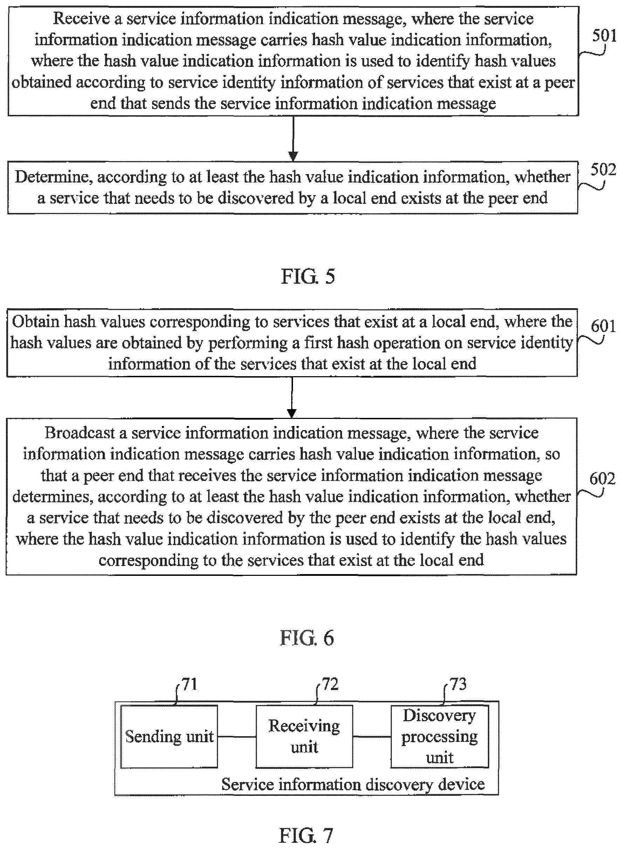

FIG. 5 is a flowchart of a service information discovery method according to still another embodiment of the present invention. As shown in FIG. 5, the method in this embodiment includes:
Step 501: Receive a service information indication message, where the service information indication message carries hash value indication information, where the hash value indication information is used to identify hash values obtained according to service identity information of services which exist at a peer end that sends the service information indication message.
Step 502: Determine, according to at least the hash value indication information, whether a service that needs to be discovered by a local end exists at the peer end.

In this embodiment, the peer end may be an AP or a STA, and the local end may be a STA. The peer end actively broadcasts the service information indication message, and notifies services that are supported by the peer end to a neighboring device by using the service information indication message. Specifically, the peer end does not directly carry, in the service information indication message, service identity information of each service supported by the peer end, as in the prior art, but carries hash value indication information used to identify a hash value obtained by performing a hash operation on the service identity information of each service supported by the peer end. As may be known from a characteristic of the hash operation, a length of the hash value is shorter than that of the service identity information of the service, and correspondingly, a length of the hash value indication information identifying the hash value is also less than a sum of lengths of service identity information of all services. However, after receiving the service information indication message of the peer end, the local end obtains the hash value indication information from the service information indication message, and may know, according to the hash value indication information, the services supported by the peer end, and may further determine whether the service that needs to be discovered by the local end exists at the peer end.

In an optional implementation manner, a manner in which the peer end carries the hash value indication information by using the service information indication message includes that: the service information indication message includes a bit table and a bit table length, where in the bit table, positions corresponding to the hash values obtained according to the service identity information of the services that exist at the peer end are set to 1, and the bit table length is determined according to a quantity of the services that exist at the peer end.

In this implementation manner, the service information indication message broadcast by the peer end does not directly carry the service identity information of the services supported by the peer end, but carries only a bit table, where each bit in the bit table is used to identify the hash value of a service that exists at the peer end. When a bit is 1, it indicates that a service whose hash value is a number corresponding to the bit exists at the peer end. For example, assuming that a fifth bit in the bit table is 1, it indicates that a service whose hash value is 5 exists at the peer end. Certainly, if a bit is 0, it indicates that a service whose hash value is a number corresponding to the bit does not exist at the peer end. For example, assuming that a third bit in the bit table is 0, it indicates that a service whose hash value is 3 does not exist at the peer end.

It is assumed that the peer end has two services, which are "UPnP:Printer" and "UPnP:Scanner" respectively. After an 8-bit hash operation is performed on the two services, one obtained hash value is 2, and another obtained hash value is 5. Therefore, the peer end carries a bit table in the service information indication message broadcast by the peer end, where the second bit and fifth bit in the bit table are set to 1. It should be noted herein that a result of the 8-bit hash operation is 0-255, 256 values in total. Based on this, the bit table length requires only 256 bits, where a start bit of the bit table may be the zeroth bit, and subsequent bits are the first bit, second bit, and so on, until the 255^{th} bit.

In the foregoing example, the bit table length used by the peer end is 256 bits. In an actual situation, the bit table length may change flexibly. For example, when a few services exist at the peer end, the bit table may be small, for example, only 64 bits, or 128 bits. Certainly, the corresponding hash operation type is also different. For example, corresponding to a 64-bit table, a 6-bit hash operation may be used, and an operation result is 0-63, 64 values in total; corresponding to a 128-bit table, a 7-bit hash operation may be used, and an operation result is 0-127, 128 values in total. Based on this, the peer end only needs to indicate, in the broadcast service information indication message, how many bits of the bit table (namely, the bit table length) are used by the peer end. Optionally, the bit table length used by the peer end may also be a predetermined fixed length.

In this implementation manner, the peer end carries a bit table and a bit table length in a service information indication message, so that the bit table length is flexible and variable, and adaptive to a change of a quantity of services that are supported by the peer end, and has strong flexibility. In addition, the service information indication message is broadcast actively, which helps a neighboring device to discover in time a service required by the neighboring device, and the bit table length is far less than a sum of lengths of service identity information of all services, which reduces the service information indication message, and further reduces channel resources occupied by the service information indication message, and helps to improve utilization of the channel resources. In addition, in a case in which the service required by the neighboring device does not exist at the peer end, the service information indication message broadcast by the peer end is reduced, which is equivalent to reducing the wasted service information indication message and further reducing the channel resources occupied by the wasted service information indication message, and therefore helps to save the channel resources, and also helps to improve utilization of the channel resources.

Based on the foregoing description, in an optional implementation manner, an implementation manner of determining, by the local end according to at least the hash value indication information, whether the service that needs to be discovered by the local end exists at the peer end, includes: obtaining a first hash value corresponding to the service that needs to be discovered by the local end, where the first hash value is obtained by performing a first hash operation on service identity information of the service that needs to be discovered by the local end; and determining, according to at least whether the first hash value exists in the hash values identified by the hash value indication information, whether the service that needs to be discovered by the local end exists at the peer end.

In an optional implementation manner, the determining, according to at least whether the first hash value exists in the hash values identified by the hash value indication information, whether the service that needs to be discovered by the local end exists at the peer end, includes that: if the first hash value exists in the hash values identified by the hash value indication information, the local end may directly determine that the service that needs to be discovered by the local end exists at the peer end, and the local end may directly attempt to use the service.

In an optional implementation manner, the determining, according to at least whether the first hash value exists in the hash values identified by the hash value indication information, whether the service that needs to be discovered by the local end exists at the peer end, includes that: if the first hash value does not exist in the hash values identified by the hash value indication information, the local end may determine that the service that needs to be discovered by the local end does not exist at the peer end.

In an optional implementation manner, the determining, according to at least whether the first hash value exists in the hash values identified by the hash value indication information, whether the service that needs to be discovered by the local end exists at the peer end, includes that: if the first hash value exists in the hash values identified by the hash value indication information, the local end may send a first query request message to the peer end, where the first query request message carries the service identity information of the service that needs to be discovered by the local end; and then receive a first query response message sent by the peer end, where the first query response message carries first result notification information, and the first result notification information is used to identify whether the service that needs to be discovered by the local end exists at the peer end; and if the first result notification information identifies that the service that needs to be discovered by the local end exists at the peer end, the local end determines that the service that needs to be discovered by the local end exists at the peer end; or if the first result notification information identifies that the service that needs to be discovered by the local end does not exist at the peer end, the local end determines that the service that needs to be discovered by the local end does not exist at the peer end. In this implementation manner, the determining, according to at least whether the first hash value exists in the hash values identified by the hash value indication information, whether the service that needs to be discovered by the local end exists at the peer end, specifically refers to: determining, according to whether the first hash value exists in the hash values identified by the hash value indication information and the first result notification information, whether the service that needs to be discovered by the local end exists at the peer end.

In this implementation manner, after the local end determines that the first hash value exists in the hash values identified by the hash value indication information, the local end may preliminarily determine that the service that needs to be discovered by the local end may exist at the peer end; the local end may further send a query request message to the peer end, where the query request message carries the service identity information of the service required by the local end, so as to further determine whether the service that needs to be discovered by the local end exists at the peer end, which improves accuracy and a success rate of discovering the service that needs to be discovered. To distinguish from a query request message in a subsequent optional implementation manner, herein the query request message is referred to as a first query request message.

In an optional implementation manner, the determining, according to at least whether the first hash value exists in the hash values identified by the hash value indication information, whether the service that needs to be discovered by the local end exists at the peer end, includes that: if the first hash value exists in the hash values identified by the hash value indication information, the local end may send a second query request message to the peer end, where the second query request message carries the first hash value and a second hash value corresponding to the service that needs to be discovered by the local end; receive a second query response message sent by the peer end, where the second query response message carries second result notification information, where the second result notification information is used to identify whether a service of which a hash value obtained by performing the second hash operation is the same as the second hash value corresponding to the service that needs to be discovered by the local end, exists in services of which the hash value obtained by performing the first hash operation is the first hash value at the peer end; and if the second result notification information identifies that the service of which the hash value obtained by performing the second hash operation is the same as the second hash value corresponding to the service that needs to be discovered by the local end, exists in the services of which the hash value obtained by performing the first hash operation is the first hash value at the peer end, determine that the service that needs to be discovered by the local end exists at the peer end; or if the second result notification information identifies that the service of which the hash value obtained by performing the second hash operation is the same as the second hash value corresponding to the service that needs to be discovered by the local end, does not exist in the services of which the hash value obtained by performing the first hash operation is the first hash value at the peer end, determine that the service that needs to be discovered by the local end does not exist at the peer end. In this implementation manner, the determining, according to at least whether the first hash value exists in the hash values identified by the hash value indication information, whether the service that needs to be discovered by the local end exists at the peer end, specifically refers to: determining, according to whether the first hash value exists in the hash values identified by the hash value indication information and the second result notification information, whether the service that needs to be discovered by the local end exists at the peer end.

In this implementation manner, a hash operation used to obtain the first hash value is called the first hash operation. After the local end determines that the first hash value exists in the hash values identified by the hash value indication information, the local end may preliminarily determine that the service that needs to be discovered by the local end may exist at the peer end. To improve accuracy of discovering the service that needs to be discovered, the local end may further use the second hash operation different from the first hash operation to perform a hash operation on the service identity information of the service that needs to be discovered by the local end, obtain the second hash value corresponding to the service that needs to be discovered by the local end, and then send the second query request message to the peer end, where the second query request message carries the first hash value and the second hash value corresponding to the service that needs to be discovered by the local end. Thereby, after receiving the second query request message, the peer end first determines existent services of which the hash value obtained by performing the first hash operation is the same as the first hash value, then obtains second hash values corresponding to the services, determines whether the second hash values corresponding to the services are the same as the second hash value corresponding to the service that needs to be discovered by the local end, and then returns a determining result to the local end as the second result notification information, so that the local end may determine, according to the second result notification information, whether the service that needs to be discovered by the local end exists at the peer end. Bit lengths of the first hash value and second hash value may be different, and a bit length of the second hash operation may be greater than a bit length of the first hash operation. For example, if the first hash operation is a 16-bit hash operation, the second hash operation may be a 32-bit or 128-bit hash operation.

Optionally, in a case in which the second result notification information identifies that the service of which the hash value obtained by performing the second hash operation is the same as the second hash value corresponding to the service that needs to be discovered by the local end, exists in the services of which the hash value obtained by performing the first hash operation is the first hash value at the peer end, the second result notification information may be service identity information of the service of which the hash value obtained by performing the second hash operation is the same as the second hash value corresponding to the service that needs to be discovered by the local end, in the services of which the hash value obtained by performing the first hash operation is the first hash value.

FIG. 6 is a flowchart of a service information discovery method according to still another embodiment of the present invention. As shown in FIG. 6, the method in this embodiment includes:
Step 601: Obtain hash values corresponding to services that exist at a local end, where the hash values are obtained by performing a first hash operation on service identity information of the services that exist at the local end.
Step 602: Broadcast a service information indication message, where the service information indication message carries hash value indication information, so that a peer end that receives the service information indication message determines, according to at least the hash value indication information, whether a service that needs to be discovered by the peer end exists at the local end, where the hash value indication information is used to identify the hash values corresponding to the services that exist at the local end.

In an optional implementation manner, an implementation manner of broadcasting a service information indication message includes: determining a bit table length according to a quantity of the services that exist at the local end; and encapsulating a bit table and the bit table length into the service information indication message, and setting positions corresponding to the hash values corresponding to the services that exist at the local end to 1, and then broadcasting the service information indication message.

In an optional implementation manner, after step 602, the method further includes: receiving a first query request message sent by the peer end, where the first query request message carries service identity information of the service that needs to be discovered by the peer end; and sending a first query response message to the peer end according to the service identity information of the service that needs to be discovered by the peer end, where the first query response message carries first result notification information, and the first result notification information is used to identify whether the service that needs to be discovered by the peer end exists at the local end, so that the peer end determines, according to at least the first result notification information, whether the service that needs to be discovered by the peer end exists at the local end.

In an optional implementation manner, after step 602, the method further includes: receiving a second query request message sent by the peer end, where the second query request message carries a first hash value corresponding to the service that needs to be discovered by the peer end and a second hash value corresponding to the service that needs to be discovered by the peer end; and sending a second query response message to the peer end according to the first hash value and second hash value corresponding to the service that needs to be discovered by the peer end, where the second query response message carries second result notification information, where the second result notification information is used to identify whether a service of which a hash value obtained by performing a second hash operation is the same as the second hash value corresponding to the service that needs to be discovered by the peer end, exists in services of which the hash value obtained by performing the first hash operation is the first hash value at the local end, so that the peer end determines, according to the second result notification information, whether the service that needs to be discovered by the peer end exists at the local end. Bit lengths of the first hash value and second hash value may be different, and a bit length of the second hash operation may be greater than a bit length of the first hash operation. For example, if the first hash operation is a 16-bit hash operation, the second hash operation may be a 32-bit or 128-bit hash operation. In this implementation manner, the determining, by the peer end according to at least the first result notification information, whether the service that needs to be discovered by the peer end exists at the local end, is specifically determining, by the peer end according to the first result notification information and second result notification information, whether the service that needs to be discovered by the peer end exists at the local end.

This embodiment is corresponding to the embodiment shown in FIG. 5. A difference lies in that the "peer end" and "local end" in this embodiment are equivalent to the "local end" and "peer end" respectively in the embodiment shown in FIG. 5. For other descriptions, reference may be made to the embodiment shown in FIG. 5, and no further description is provided herein.

In this embodiment, the local end cooperates with the peer end; a service information indication message carries a bit table and a bit table length, so that the bit table length is flexible and variable, and adaptive to a change of a quantity of services that are supported by the peer end, and has strong flexibility. In addition, the service information indication message is broadcast actively, which helps a neighboring device to discover in time a service required by the neighboring device, and the bit table length is far less than a sum of lengths of service identity information of all services, which reduces the service information indication message, and further reduces channel resources occupied by the service information indication message, and helps to improve utilization of the channel resources. In addition, in a case in which the service required by the neighboring device does not exist at the local end, the service information indication message broadcast by the local end is reduced, which is equivalent to reducing the wasted service information indication message and further reducing the channel resources occupied by the service information indication message, and therefore helps to save the channel resources, and also helps to improve utilization of the channel resources.

FIG. 7 is a schematic structural diagram of a service information discovery device according to an embodiment of the present invention. As shown in FIG. 7, the device in this embodiment includes: a sending unit 71, a receiving unit 72, and a discovery processing unit 73.

The sending unit 71 is configured to send a first query request message, where the first query request message carries a first hash value, and the first hash value is obtained by performing a first hash operation on service identity information of a service to be discovered.

The receiving unit 72 is configured to receive a first query response message sent by a peer end, where the first query response message carries first result notification information, and the first result notification information is used to identify whether a service of which a hash value obtained by performing the first hash operation is the first hash value exists at the peer end. The receiving unit 72 is connected to the sending unit 71, and configured to receive, after the sending unit 71 sends the first query request message, the first query response message sent by the peer end.

The discovery processing unit 73 is connected to the receiving unit 72, and configured to determine, according to at least the first result notification information received by the receiving unit 72, whether the service to be discovered exists at the peer end.

In an optional implementation manner, the first result notification information is existence indication information used to indicate that the service of which the hash value obtained by performing the first hash operation is the first hash value exists at the peer end.

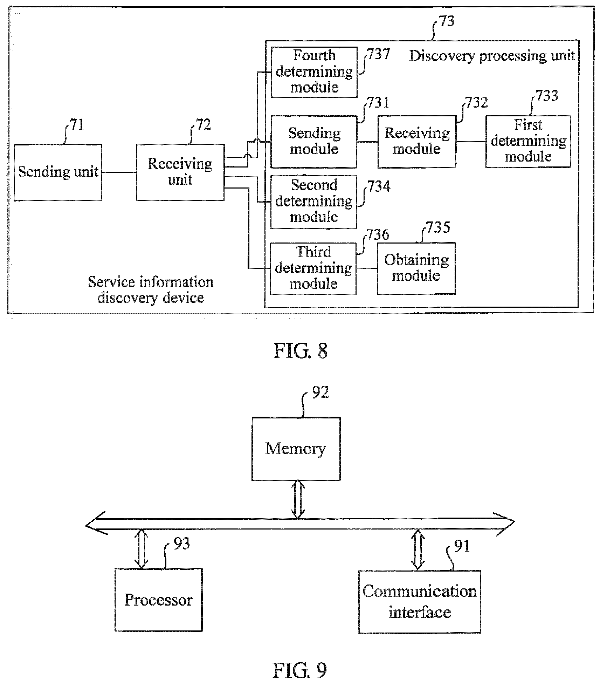

Based on this, as shown in FIG. 8, an implementation structure of the discovery processing unit 73 includes: a sending module 731, a receiving module 732, and a first determining module 733.

The sending module 731 is connected to the receiving unit 72, and configured to send a second query request message to the peer end according to the existence indication information received by the receiving unit 72, where the second query request message carries the service identity information of the service to be discovered.

The receiving module 732 is configured to receive a second query response message returned by the peer end, where the second query response message carries second result notification information, where the second result notification information is used to identify whether the service to be discovered exists at the peer end. The receiving module 732 is connected to the sending module 731, and configured to receive, after the sending module 731 sends the second query request message, the second query response message returned by the peer end.

The first determining module 733 is connected to the receiving module 732, and configured to determine, when the second result notification information identifies that the service to be discovered exists at the peer end, that the service to be discovered exists at the peer end, or determine, when the second result notification information identifies that the service to be discovered does not exist at the peer end, that the service to be discovered does not exist at the peer end.

In an optional implementation manner, the first result notification information is nonexistence indication information used to indicate that the service of which the hash value obtained by performing the first hash operation is the first hash value does not exist at the peer end.

Based on this, as shown in FIG. 8, another implementation structure of the discovery processing unit 73 includes: a second determining module 734. The second determining module 734 is connected to the receiving unit 72, and configured to determine, according to the nonexistence indication information received by the receiving unit 72, that the service to be discovered does not exist at the peer end.

In an optional implementation manner, the first result notification information is a second hash value corresponding to the service of which the hash value obtained by performing the first hash operation is the first hash value. The hash value of the first hash operation is the second hash value corresponding to the service of the first hash value, and is obtained by performing a second hash operation on service identity information of the service of which the hash value obtained by performing the first hash operation is the first hash value. Bit lengths of the first hash value and second hash value may be different, and a bit length of the second hash operation may be greater than a bit length of the first hash operation. For example, if the first hash operation is a 16-bit hash operation, the second hash operation may be a 32-bit or 128-bit hash operation.

Based on this, as shown in FIG. 8, still another implementation structure of the discovery processing unit 73 includes: an obtaining module 735 and a third determining module 736.

The obtaining module 735 is configured to perform the second hash operation on the service identity information of the service to be discovered, and obtain the second hash value corresponding to the service to be discovered.

The third determining module 736 is connected to the obtaining module 735 and receiving unit 72, and configured to determine, when the second hash value corresponding to the service to be discovered exists in the first query response message, that the service to be discovered exists at the peer end, or determine, when the second hash value corresponding to the service to be discovered does not exist in the first query response message, that the service to be discovered does not exist at the peer end.

Optionally, the first hash operation may be a 16-bit hash operation, and the second hash operation may be a 32-bit hash operation.

In an optional implementation manner, the first result notification information is the service identity information of the service of which the hash value obtained by performing the first hash operation is the first hash value.

Based on this, as shown in FIG. 8, still another implementation structure of the discovery processing unit 73 includes: a fourth determining module 737. The fourth determining module 737 is connected to the receiving unit 72, and configured to determine, when the service identity information of the service to be discovered exists in the first query response message, that the service to be discovered exists at the peer end, or determine, when the service identity information of the service to be discovered does not exist in the first query response message, that the service to be discovered does not exist at the peer end.

The service information discovery device provided by this embodiment may be a STA, which is not limited.

The functional units or modules of the service information discovery device provided by this embodiment may be configured to execute the procedure of the method embodiment shown in FIG. 1 or FIG. 2. The detailed working principles thereof are not further described. For details, reference may be made to the description of the method embodiment.

The service information discovery device provided by this embodiment actively sends a query request message, and finds whether a service that needs to be discovered by the service information discovery device exists in a neighboring device. In this process, by carrying a short hash value of service identity information in the query request message instead of directly carrying service identity information of the service to be discovered, the length of the query request message is reduced, which helps to reduce occupancy of channel resources by the query request message, and helps to save the channel resources; on the other hand, in a case in which the query request message is wasted, the length of the query request message is reduced, which is equivalent to shortening the wasted query request message, and therefore also helps to reduce the waste of the channel resources, and also helps to improve utilization of radio resources.

FIG. 9 is a schematic structural diagram of a service information discovery device according to still another embodiment of the present invention. As shown in FIG. 9, the device in this embodiment includes: a communication interface 91, a processor 92, and a memory 93.

The communication interface 91 is configured to send a first query request message, where the first query request message carries a first hash value, and the first hash value is obtained by performing a first hash operation on service identity information of a service to be discovered; and configured to receive a first query response message sent by a peer end, where the first query response message carries first result notification information, and the first result notification information is used to identify whether a service of which a hash value obtained by performing the first hash operation is the first hash value exists at the peer end.

The memory 93 is configured to store a program. Specifically, the program may include program code, where the program code includes a computer operation instruction. The memory 93 may include a high-speed RAM memory, and may also include a non-volatile memory (non-volatile memory), for example, at least one disk storage.

The processor 92 is configured to execute the program stored by the memory 93, so as to determine, according to at least the first result notification information received by the communication interface 91, whether the service to be discovered exists at the peer end. The processor 92 may include one or more central processing units (Central Processing Units, CPUs for short), or an application specific integrated circuit (Application Specific Integrated Circuit, ASIC for short), or is configured as one or more integrated circuits for implementing the embodiments of the present invention.

In an optional implementation manner, the first result notification information is existence indication information used to indicate that the service of which the hash value obtained by performing the first hash operation is the first hash value exists at the peer end. The processor 92 is specifically configured to control the communication interface 91 to: send, according to the received existence indication information, a second query request message to the peer end, and receive a second query response message returned by the peer end, where the second query request message carries the service identity information of the service to be discovered, and the second query response message carries second result notification information, where the second result notification information is used to identify whether the service to be discovered exists at the peer end; then determine, when the second result notification information identifies that the service to be discovered exists at the peer end, that the service to be discovered exists at the peer end, or determine, when the second result notification information identifies that the service to be discovered does not exist at the peer end, that the service to be discovered does not exist at the peer end.

In an optional implementation manner, the first result notification information is nonexistence indication information used to indicate that the service of which the hash value obtained by performing the first hash operation is the first hash value does not exist at the peer end. The processor 92 is specifically configured to determine, according to the nonexistence indication information received by the communication interface 91, that the service to be discovered does not exist at the peer end.

In an optional implementation manner, the first result notification information is a second hash value corresponding to the service of which the hash value obtained by performing the first hash operation is the first hash value. The hash value of the first hash operation is the second hash value corresponding to the service of the first hash value, and is obtained by performing a second hash operation on service identity information of the service of which the hash value obtained by performing the first hash operation is the first hash value. Based on this, the processor 92 is specifically configured to perform the second hash operation on the service identity information of the service to be discovered, and obtain a second hash value corresponding to the service to be discovered; and when the second hash value corresponding to the service to be discovered exists in the first query response message, determine that the service to be discovered exists at the peer end, or when the second hash value corresponding to the service to be discovered does not exist in the first query response message, determine that the service to be discovered does not exist at the peer end.

Optionally, the first hash operation may be a 16-bit hash operation, and the second hash operation may be a 32-bit hash operation.

In an optional implementation manner, the first result notification information is the service identity information of the service of which the hash value obtained by performing the first hash operation is the first hash value. Based on this, the processor 92 is specifically configured to determine, when the service identity information of the service to be discovered exists in the first query response message, that the service to be discovered exists at the peer end, or determine, when the service identity information of the service to be discovered does not exist in the first query response message, that the service to be discovered does not exist at the peer end.

Optionally, if the foregoing communication interface 91, processor 92, and memory 93 are implemented independently of each other, the communication interface 91, processor 92, and memory 93 may interconnect and communicate with each other through a bus. The bus may be an industry standard architecture (Industry Standard Architecture, ISA) bus, a peripheral component interconnect (Peripheral Component Interconnect, PCI) bus, or an extended industry standard architecture (Extended Industry Standard Architecture, EISA) bus, and so on. The bus may be classified into an address bus, a data bus, a control bus, and so on. For ease of expression, the bus is indicated by only a solid line in FIG. 9, which does not mean that only one bus or one type of bus exists.

If the foregoing communication interface 91, processor 92, and memory 93 are integrated into a chip for implementation, the communication interface 91, processor 92, and memory 93 may communicate with each other through an internal interface.

The service information discovery device provided by this embodiment may be a STA, which is not limited.

The service information discovery device provided by this embodiment may be configured to execute the procedure of the method embodiment shown in FIG. 1 or FIG. 2. The detailed working principles thereof are not further described. For details, reference may be made to the description of the method embodiment.

The service information discovery device provided by this embodiment actively sends a query request message, and finds whether a service that needs to be discovered by the service information discovery device exists in a neighboring device. In this process, by carrying a short hash value of service identity information in the query request message instead of directly carrying service identity information of the service to be discovered, the length of the query request message is reduced, which helps to reduce occupancy of channel resources by the query request message, and helps to save the channel resources; on the other hand, in a case in which the query request message is wasted, the length of the query request message is reduced, which is equivalent to shortening the wasted query request message, and therefore also helps to reduce the waste of the channel resources, and also helps to improve utilization of radio resources.

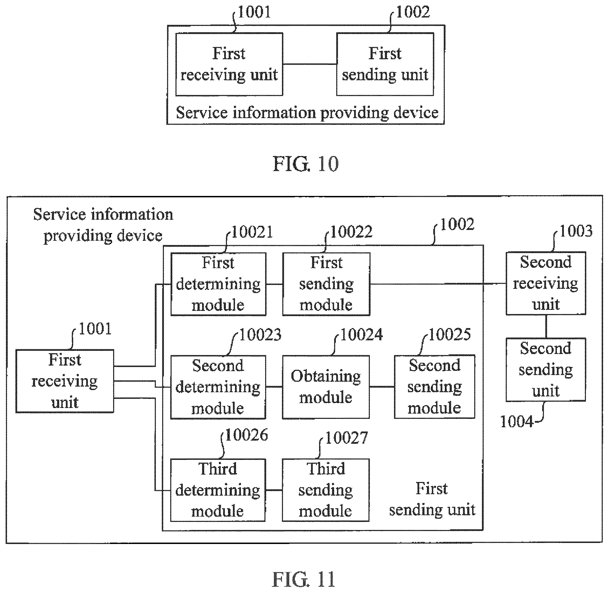

FIG. 10 is a schematic structural diagram of a service information providing device according to an embodiment of the present invention. As shown in FIG. 10, the device in this embodiment includes: a first receiving unit 1001 and a first sending unit 1002.

The first receiving unit 1001 is configured to receive a first query request message, where the first query request message carries a first hash value, and the first hash value is obtained, by performing a first hash operation on service identity information of a service to be discovered, by a peer end that sends the first query request message.

The first sending unit 1002 is configured to send a first query response message, where the first query response message carries first result notification information, so that the peer end determines, according to at least the first result notification information, whether the service to be discovered exists at a local end, and the first result notification information is used to identify whether a service of which a hash value obtained by performing the first hash operation is the first hash value exists at the local end. The first sending unit 1002 is connected to the first receiving unit 1001, and specifically configured to send, after the first receiving unit 1001 receives the first query request message, the first query response message to the peer end according to the first query request message.

In an optional implementation manner, as shown in FIG. 11, an implementation structure of the first sending unit 1002 includes: a first determining module 10021 and a first sending module 10022.

The first determining module 10021 is connected to the first receiving unit 1001, and configured to determine, according to the first hash value received by the first receiving unit 1001, whether the service of which the hash value obtained by performing the first hash operation is the first hash value exists at the local end.

The first sending module 10022 is connected to the first determining module 10021, and configured to encapsulate, when the first determining module 10021 determines that the service of which the hash value obtained by performing the first hash operation is the first hash value exists at the local end, existence indication information into the first query response message as the first result notification information, and send the first query response message to the peer end, where the existence indication information is used to identify that the service of which the hash value obtained by performing the first hash operation is the first hash value exists at the local end; or encapsulate, when the first determining module 10021 determines that the service of which the hash value obtained by performing the first hash operation is the first hash value does not exist at the local end, nonexistence indication information into the first query response message as the first result notification information, and send the first query response message to the peer end, where the nonexistence indication information is used to identify that the service of which the hash value obtained by performing the first hash operation is the first hash value does not exist at the local end.

Based on the foregoing description, as shown in FIG. 11, the service information providing device further includes: a second receiving unit 1003 and a second sending unit 1004.

The second receiving unit 1003 is configured to receive a second query request message sent by the peer end according to the existence indication information, where the second query request message carries the service identity information of the service to be discovered. The second receiving unit 1003 is connected to the first sending module 10022.

The second sending unit 1004 is configured to send a second query response message to the peer end, where the second query response message carries second result notification information, so that the peer end determines, according to the second result notification information, whether the service to be discovered exists at the local end, where the second result notification information is used to identify whether the service to be discovered exists at the local end. The second sending unit 1004 is connected to the second receiving unit 1003, and specifically configured to send the second query response message to the peer end after the second receiving unit 1003 receives the second query request message.

In an optional implementation manner, as shown in FIG. 11, another implementation structure of the first sending unit 1002 includes: a second determining module 10023, an obtaining module 10024, and a second sending module 10025.

The second determining module 10023 is connected to the first receiving unit 1001, and configured to determine, according to the first hash value received by the first receiving unit 1001, whether the service of which the hash value obtained by performing the first hash operation is the first hash value exists at the local end.

The obtaining module 10024 is connected to the second determining module 10023, and configured to obtain, when the second determining module 10023 determines that the service of which the hash value obtained by performing the first hash operation is the first hash value exists at the local end, a second hash value corresponding to the service of which the hash value obtained by performing the first hash operation is the first hash value, where the second hash value corresponding to the service of which the hash value obtained by performing the first hash operation is the first hash value is obtained by performing a second hash operation on service identity information of the service of which the hash value obtained by performing the first hash operation is the first hash value. Bit lengths of the first hash value and second hash value may be different, and a bit length of the second hash operation may be greater than a bit length of the first hash operation. For example, if the first hash operation may be a 16-bit hash operation, the second hash operation may be a 32-bit or 128-bit hash operation.

The second sending module 10025 is connected to the obtaining module 10024, and configured to encapsulate the second hash value that is obtained by the obtaining module 10024 and corresponding to the service of which the hash value obtained by performing the first hash operation is the first hash value, into the first query response message as the first result notification information, and send the first query response message to the peer end.

In an optional implementation manner, as shown in FIG. 11, still another implementation structure of the first sending unit 1002 includes: a third determining module 10026 and a third sending module 10027.

The third determining module 10026 is connected to the first receiving unit 1001, and configured to determine, according to the first hash value received by the first receiving unit 1001, whether the service of which the hash value obtained by performing the first hash operation is the first hash value exists at the local end.

The third sending module 10027 is connected to the third determining module 10026, and configured to encapsulate, when the third determining module 10026 determines that the service of which the hash value obtained by performing the first hash operation is the first hash value exists at the local end, service identity information of the service of which the hash value obtained by performing the first hash operation is the first hash value, into the first query response message as the first result notification information, and send the first query response message to the peer end.

The service information providing device provided by this embodiment may be an AP or a STA, which is not limited.

The functional units or modules of the service information providing device provided by this embodiment may be configured to execute the procedure of the method embodiment shown in FIG. 3 or FIG. 4. The detailed working principles thereof are not further described. For details, reference may be made to the description of the method embodiment.

The service information providing device provided by this embodiment cooperates with the service information discovery device provided by the foregoing embodiment, so that the service information discovery device may carry, in a query request message, a short hash value of service identity information instead of directly carrying service identity information of a service to be discovered, which reduces the length of the query request message, helps to reduce occupancy of channel resources by the query request message, and helps to save the channel resources; on the other hand, in a case in which the query request message is wasted, the length of the query request message is reduced, which is equivalent to shortening the wasted query request message, and therefore also helps to reduce the waste of the channel resources, and also helps to improve utilization of radio resources.

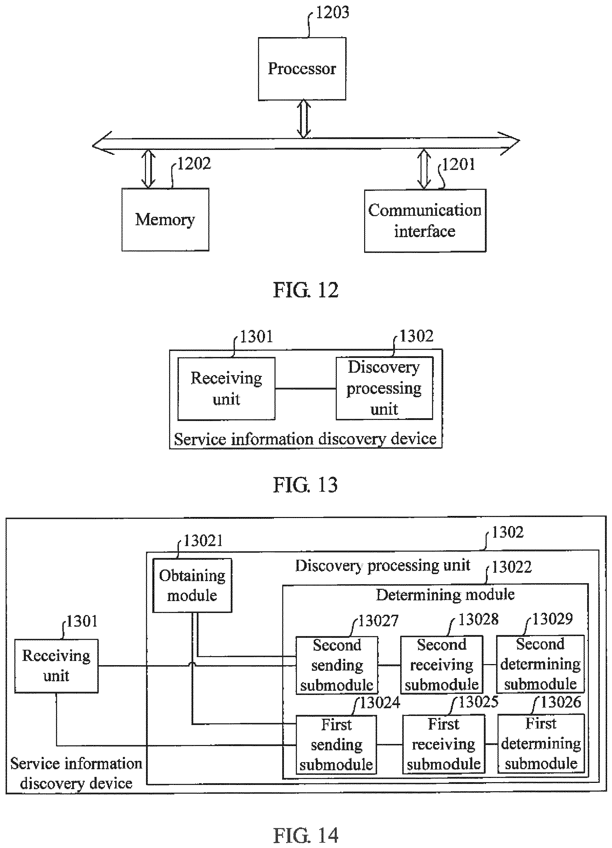

FIG. 12 is a schematic structural diagram of a service information providing device according to still another embodiment of the present invention. As shown in FIG. 12, the device in this embodiment includes: a communication interface 1201, a memory 1202, and a processor 1203.

The communication interface 1201 is configured to receive a first query request message, and send a first query response message, where the first query request message carries a first hash value, and the first hash value is obtained, by performing a first hash operation on service identity information of a service to be discovered, by a peer end that sends the first query request message, and the first query response message carries first result notification information, so that the peer end determines, according to at least the first result notification information, whether the service to be discovered exists at a local end, where the first result notification information is used to identify whether a service of which a hash value obtained by performing the first hash operation is the first hash value exists at the local end.

The memory 1202 is configured to store a program. Specifically, the program may include program code, where the program code includes a computer operation instruction. The memory 1202 may include a high-speed RAM memory, and may also include a non-volatile memory (non-volatile memory), for example, at least one disk storage.

The processor 1203 is configured to execute the program stored by the memory 1202. The processor 1203 may include one or more CPUs, or a specific ASIC, or is configured as one or more integrated circuits for implementing the embodiments of the present invention.

In an optional implementation manner, the processor 1203 is configured to determine, according to the first hash value received by the communication interface 1201, whether the service of which the hash value obtained by performing the first hash operation is the first hash value exists at the local end, and provide a determining result for the communication interface 1201. The communication interface 1201 is specifically configured to encapsulate, when the processor 1203 determines that the service of which the hash value obtained by performing the first hash operation is the first hash value exists at the local end, existence indication information into the first query response message as the first result notification information, and send the first query response message to the peer end, where the existence indication information is used to identify that the service of which the hash value obtained by performing the first hash operation is the first hash value exists at the local end, or encapsulate, when the processor 1203 determines that the service of which the hash value obtained by performing the first hash operation is the first hash value does not exist at the local end, nonexistence indication information into the first query response message as the first result notification information, and send the first query response message to the peer end, where the nonexistence indication information is used to identify that the service of which the hash value obtained by performing the first hash operation is the first hash value does not exist at the local end.

Based on the foregoing description, the communication interface 1201 is further configured to receive a second query request message sent by the peer end according to the existence indication information, and send a second query response message to the peer end, where the second query request message carries the service identity information of the service to be discovered, and the second query response message carries second result notification information, so that the peer end determines, according to the second result notification information, whether the service to be discovered exists at the local end, where the second result notification information is used to identify whether the service to be discovered exists at the local end.

In an optional implementation manner, the processor 1203 is configured to determine, according to the first hash value received by the communication interface 1201, whether the service of which the hash value obtained by performing the first hash operation is the first hash value exists at the local end, and obtain, when it is determined that the service of which the hash value obtained by performing the first hash operation is the first hash value exists at the local end, a second hash value corresponding to the service of which the hash value obtained by performing the first hash operation is the first hash value, and provide the obtained second hash value for the communication interface 1201, where the second hash value corresponding to the service of which the hash value obtained by performing the first hash operation is the first hash value is obtained by performing a second hash operation on service identity information of the service of which the hash value obtained by performing the first hash operation is the first hash value. The communication interface 1201 is specifically configured to encapsulate the second hash value corresponding to the service of which the hash value obtained by performing the first hash operation is the first hash value, into the first query response message as the first result notification information, and send the first query response message to the peer end.

Optionally, a bit length of the second hash operation may be greater than a bit length of the first hash operation. For example, the first hash operation may be a 16-bit hash operation, and the second hash operation may be a 32-bit hash operation.

In an optional implementation manner, the processor 1203 is configured to determine, according to the first hash value received by the communication interface 1201, whether the service of which the hash value obtained by performing the first hash operation is the first hash value exists at the local end, and provide a determining result for the communication interface 1201. The communication interface 1201 is specifically configured to encapsulate, when the processor 1203 determines that the service of which the hash value obtained by performing the first hash operation is the first hash value exists at the local end, service identity information of the service of which the hash value obtained by performing the first hash operation is the first hash value, into the first query response message as the first result notification information, and send the first query response message to the peer end.

Optionally, if the foregoing communication interface 1201, memory 1202, and processor 1203 are implemented independently of each other, the communication interface 1201, memory 1202, and processor 1203 may interconnect and communicate with each other through a bus. The bus may be an ISA bus, a PCI bus, or an EISA bus, and so on. The bus may be classified into an address bus, a data bus, a control bus, and so on. For ease of expression, the bus is indicated by only a solid line in FIG. 12, which does not mean that only one bus or one type of bus exists.

If the foregoing communication interface 1201, memory 1202, and processor 1203 are integrated into a chip for implementation, the communication interface 1201, memory 1202, and processor 1203 may communicate with each other through an internal interface.

The service information providing device provided by this embodiment may be an AP or a STA, which is not limited.

The service information providing device provided by this embodiment may be configured to execute the procedure of the method embodiment shown in FIG. 3 or FIG. 4. The detailed working principles thereof are not further described. For details, reference may be made to the description of the method embodiment.

The service information providing device provided by this embodiment cooperates with the service information discovery device provided by the foregoing embodiment, so that the service information discovery device may carry, in a query request message, a short hash value of service identity information instead of directly carrying service identity information of a service to be discovered, which reduces the length of the query request message, helps to reduce occupancy of channel resources by the query request message, and helps to save the channel resources; on the other hand, in a case in which the query request message is wasted, the length of the query request message is reduced, which is equivalent to shortening the wasted query request message, and therefore also helps to reduce the waste of the channel resources, and also helps to improve utilization of radio resources.

FIG. 13 is a schematic structural diagram of a service information discovery device according to still another embodiment of the present invention. As shown in FIG. 13, the device in this embodiment includes: a receiving unit 1301 and a discovery processing unit 1302.

The receiving unit 1301 is configured to receive a service information indication message, where the service information indication message carries hash value indication information, where the hash value indication information is used to identify hash values obtained according to service identity information of services which exist at a peer end that sends the service information indication message.

The discovery processing unit 1302 is connected to the receiving unit 1301, and configured to determine, according to at least the hash value indication information received by the receiving unit 1301, whether a service that needs to be discovered by a local end exists at the peer end. The local end is a service information discovery device side in this embodiment.

In an optional implementation manner, as shown in FIG. 14, an implementation structure of the discovery processing unit 1302 includes: an obtaining module 13021 and a determining module 13022.

The obtaining module 13021 is configured to obtain a first hash value corresponding to the service that needs to be discovered by the local end, where the first hash value is obtained by performing a first hash operation on service identity information of the service that needs to be discovered by the local end.

The determining module 13022 is connected to the obtaining module 13021 and receiving unit 1301, and configured to determine, according to at least whether the first hash value obtained by the obtaining module 13021 exists in the hash values identified by the hash value indication information received by the receiving unit 1301, whether the service that needs to be discovered by the local end exists at the peer end.

Based on the foregoing description, as shown in FIG. 14, an implementation structure of the determining module 13022 includes: a first sending submodule 13024, a first receiving submodule 13025, and a first determining submodule 13026.

The first sending submodule 13024 is connected to the obtaining module 13021 and receiving unit 1301, and configured to send a first query request message to the peer end when the first hash value exists in the hash values identified by the hash value indication information, where the first query request message carries the service identity information of the service that needs to be discovered by the local end.

The first receiving submodule 13025 is configured to receive a first query response message sent by the peer end, where the first query response message carries first result notification information, and the first result notification information is used to identify whether the service that needs to be discovered by the local end exists at the peer end. The first receiving submodule 13025 is connected to the first sending submodule 13024, and configured to receive, after the first sending submodule 13024 sends the first query request message, the first query response message sent by the peer end.

The first determining submodule 13026 is connected to the first receiving submodule 13025, and configured to determine, when the first result notification information received by the first receiving submodule 13025 identifies that the service that needs to be discovered by the local end exists at the peer end, that the service that needs to be discovered by the local end exists at the peer end, or determine, when the first result notification information received by the first receiving submodule 13025 identifies that the service that needs to be discovered by the local end does not exist at the peer end, that the service that needs to be discovered by the local end does not exist at the peer end.

Based on the foregoing description, as shown in FIG. 14, another implementation structure of the determining module 13022 includes: a second sending submodule 13027, a second receiving submodule 13028, and a second determining submodule 13029.

The second sending submodule 13027 is connected to the obtaining module 13021 and receiving unit 1301, and configured to send a second query request message to the peer end when the first hash value exists in the hash values identified by the hash value indication information, where the second query request message carries the first hash value and a second hash value corresponding to the service that needs to be discovered by the local end, where the second hash value corresponding to the service that needs to be discovered by the local end is obtained by performing a second hash operation on the service identity information of the service that needs to be discovered by the local end. Bit lengths of the first hash value and second hash value may be different, and a bit length of the second hash operation may be greater than a bit length of the first hash operation. For example, if the first hash operation is a 16-bit hash operation, the second hash operation may be a 32-bit or 128-bit hash operation.

The second receiving submodule 13028 is configured to receive a second query response message sent by the peer end, where the second query response message carries second result notification information, where the second result notification information is used to identify whether a service of which a hash value obtained by performing the second hash operation is the same as the second hash value corresponding to the service that needs to be discovered by the local end, exists in services of which the hash value obtained by performing the first hash operation is the first hash value at the peer end. The second receiving submodule 13028 is connected to the second sending submodule 13027, and configured to receive, after the second sending submodule 13027 sends the second query request message, the second query response message sent by the peer end.

The second determining submodule 13029 is connected to the second receiving submodule 13028, and configured to determine, when the second result notification information received by the second receiving submodule 13028 identifies that the service of which the hash value obtained by performing the second hash operation is the same as the second hash value corresponding to the service that needs to be discovered by the local end, exists in the services of which the hash value obtained by performing the first hash operation is the first hash value at the peer end, that the service that needs to be discovered by the local end exists at the peer end, or determine, when the second result notification information received by the second receiving submodule 13028 identifies that the service of which the hash value obtained by performing the second hash operation is the same as the second hash value corresponding to the service that needs to be discovered by the local end, does not exist in the services of which the hash value obtained by performing the first hash operation is the first hash value at the peer end, that the service that needs to be discovered by the local end does not exist at the peer end.

The service information discovery device provided by this embodiment may be a STA, which is not limited.

The functional units or modules of the service information discovery device provided by this embodiment may be configured to execute the procedure of the method embodiment shown in FIG. 5. The detailed working principles thereof are not further described. For details, reference may be made to the description of the method embodiment.

The service information discovery device provided by this embodiment receives a service information indication message that is actively broadcast by the peer end, and further discovers, according to hash value indication information in the service information indication message, whether the peer end has a service that needs to be discovered by the service information discovery device. A length of the hash value indication information is far less than a sum of lengths of service identity information of all services, which reduces the service information indication message, and further reduces channel resources occupied by the service information indication message, and helps to improve utilization of the channel resources.

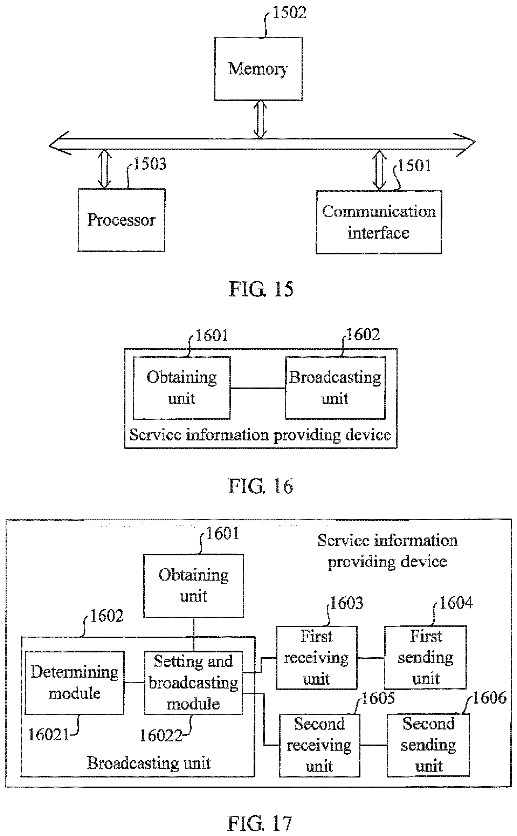

FIG. 15 is a schematic structural diagram of a service information discovery device according to still another embodiment of the present invention. As shown in FIG. 15, the device in this embodiment includes: a communication interface 1501, a processor 1502, and a memory 1503.

The communication interface 1501 is configured to receive a service information indication message, where the service information indication message carries hash value indication information, where the hash value indication information is used to identify hash values obtained according to service identity information of services which exist at a peer end that sends the service information indication message.

The memory 1503 is configured to store a program. Specifically, the program may include program code, where the program code includes a computer operation instruction. The memory 1503 may include a high-speed RAM memory, and may also include a non-volatile memory (non-volatile memory), for example, at least one disk storage.

The processor 1502 is configured to execute the program stored by the memory 1503, so as to determine, according to the hash value indication information received by the communication interface 1501, whether a service that needs to be discovered by a local end exists at the peer end. The local end is a service information discovery device side in this embodiment. The processor 1502 may include one or more CPUs, or a specific ASIC, or is configured as one or more integrated circuits for implementing the embodiments of the present invention.

In an optional implementation manner, the processor 1502 is specifically configured to obtain a first hash value corresponding to the service that needs to be discovered by the local end, where the first hash value is obtained by performing a first hash operation on service identity information of the service that needs to be discovered by the local end; and determine, according to at least whether the first hash value exists in the hash values identified by the hash value indication information received by the communication interface 1501, whether the service that needs to be discovered by the local end does not exist at the peer end.

Based on the foregoing description, the processor 1502 is specifically configured to control, when the first hash value exists in the hash values identified by the hash value indication information, the communication interface 1501 to: send a first query request message to the peer end, and receive a first query response message sent by the peer end; and determine, when first result notification information received by the communication interface 1501 identifies that the service that needs to be discovered by the local end exists at the peer end, that the service that needs to be discovered by the local end exists at the peer end, or determine, when first result notification information received by the communication interface 1501 identifies that the service that needs to be discovered by the local end does not exist at the peer end, that the service that needs to be discovered by the local end does not exist at the peer end. The first query request message carries service identity information of the service that needs to be discovered by the local end; and the first query response message carries the first result notification information, where the first result notification information is used to identify whether the service that needs to be discovered by the local end exists at the peer end. Correspondingly, the communication interface 1501 is further configured to: under control of the processor 1502, send the first query request message to the peer end and receive the first query response message sent by the peer end.

Alternatively, the processor 1502 is specifically configured to control, when the first hash value exists in the hash values identified by the hash value indication information, the communication interface 1501 to: send a second query request message to the peer end, and receive a second query response message sent by the peer end; and when second result notification information received by the communication interface 1501 identifies that a service of which a hash value obtained by performing a second hash operation is the same as a second hash value corresponding to the service that needs to be discovered by the local end, exists in services of which the hash value obtained by performing the first hash operation is the first hash value at the peer end, determine that the service that needs to be discovered by the local end exists at the peer end, or when second result notification information received by the communication interface 1501 identifies that a service of which a hash value obtained by performing a second hash operation is the same as a second hash value corresponding to the service that needs to be discovered by the local end, does not exist in services of which the hash value obtained by performing the first hash operation is the first hash value at the peer end, determine that the service that needs to be discovered by the local end does not exist at the peer end. The second query request message carries the first hash value and the second hash value corresponding to the service that needs to be discovered by the local end, where the second hash value corresponding to the service that needs to be discovered by the local end is obtained by performing the second hash operation on the service identity information of the service that needs to be discovered by the local end; and the second query response message carries the second result notification information, where the second result notification information is used to identify whether the service of which the hash value obtained by performing the second hash operation is the same as the second hash value corresponding to the service that needs to be discovered by the local end, exists in the services of which the hash value obtained by performing the first hash operation is the first hash value at the peer end. Correspondingly, the communication interface 1501 is further configured to: under control of the processor 1502, send the second query request message to the peer end and receive the second query response message sent by the peer end.

Optionally, if the foregoing communication interface 1501, memory 1503, and processor 1502 are implemented independently of each other, the communication interface 1501, memory 1503, and processor 1502 may interconnect and communicate with each other through a bus. The bus may be an ISA bus, a PCI bus, or an EISA bus, and so on. The bus may be classified into an address bus, a data bus, a control bus, and so on. For ease of expression, the bus is indicated by only a solid line in FIG. 15, which does not mean that only one bus or one type of bus exists.

If the foregoing communication interface 1501, memory 1503, and processor 1502 are integrated into a chip for implementation, the communication interface 1501, memory 1503, and processor 1502 may communicate with each other through an internal interface.

The service information discovery device provided by this embodiment may be a STA, which is not limited.

The service information discovery device provided by this embodiment may be configured to execute the procedure of the method embodiment shown in FIG. 5. The detailed working principles thereof are not further described. For details, reference may be made to the description of the method embodiment.

The service information discovery device provided by this embodiment receives a service information indication message that is actively broadcast by the peer end, and further discovers, according to hash value indication information in the service information indication message, whether the peer end has a service that needs to be discovered by the service information discovery device. A length of the hash value indication information is far less than a sum of lengths of service identity information of all services, which reduces the service information indication message, and further reduces channel resources occupied by the service information indication message, and helps to improve utilization of the channel resources.

FIG. 16 is a schematic structural diagram of a service information providing device according to still another embodiment of the present invention. As shown in FIG. 16, the device in this embodiment includes: an obtaining unit 1601 and a broadcasting unit 1602.

The obtaining unit 1601 is configured to obtain hash values corresponding to services that exist at a local end, where the hash values are obtained by performing a first hash operation on service identity information of the services that exist at the local end.

The broadcasting unit 1602 is connected to the obtaining unit 1601, and configured to broadcast a service information indication message, where the service information indication message carries hash value indication information, so that a peer end that receives the service information indication message determines, according to at least the hash value indication information, whether a service that needs to be discovered by the peer end exists at the local end, where the hash value indication information is used to identify the hash values corresponding to the services that exist at the local end.

In an optional implementation manner, as shown in FIG. 17, an implementation structure of the broadcasting unit 1602 includes: a determining module 16021 and a setting and broadcasting module 16022.

The determining module 16021 is configured to determine a bit table length according to a quantity of the services that exist at the local end.

The setting and broadcasting module 16022 is connected to the determining module 16021, and configured to encapsulate a bit table and the bit table length into the service information indication message, and set positions corresponding to the hash values corresponding to the services that exist at the local end to 1, and then broadcast the service information indication message.

In an optional implementation manner, as shown in FIG. 17, the service information providing device further includes: a first receiving unit 1603 and a first sending unit 1604.

The first receiving unit 1603 is configured to receive a first query request message sent by the peer end, where the first query request message carries service identity information of the service that needs to be discovered by the peer end. The first receiving unit 1603 may be connected to the setting and broadcasting module 16022.

The first sending unit 1604 is connected to the first receiving unit 1603, and configured to send a first query response message to the peer end according to the service identity information of the service that needs to be discovered by the peer end, where the first query response message carries first result notification information, and the first result notification information is used to identify whether the service that needs to be discovered by the peer end exists at the local end, so that the peer end determines, according to at least the first result notification information, whether the service that needs to be discovered by the peer end exists at the local end.

In an optional implementation manner, as shown in FIG. 17, the service information providing device further includes: a second receiving unit 1605 and a second sending unit 1606.

The second receiving unit 1605 is configured to receive a second query request message sent by the peer end, where the second query request message carries a first hash value corresponding to the service that needs to be discovered by the peer end and a second hash value corresponding to the service that needs to be discovered by the peer end, where the first hash value and second hash value corresponding to the service that needs to be discovered by the peer end are obtained by respectively performing the first hash operation and a second hash operation on service identity information of the service that needs to be discovered by the peer end. The second receiving unit 1605 may be connected to the setting and broadcasting module 16022. Bit lengths of the first hash value and second hash value may be different, and a bit length of the second hash operation may be greater than a bit length of the first hash operation. For example, if the first hash operation is a 16-bit hash operation, the second hash operation may be a 32-bit or 128-bit hash operation.

The second sending unit 1606 is connected to the second receiving unit 1605, and configured to send a second query response message to the peer end according to the first hash value and second hash value, where the second query response message carries second result notification information, where the second result notification information is used to identify whether a service of which a hash value obtained by performing the second hash operation is the same as the second hash value, exists in services of which the hash value obtained by performing the first hash operation is the first hash value at the local end, so that the peer end determines, according to the second result notification information, whether the service that needs to be discovered by the peer end exists at the local end.

The service information providing device provided by this embodiment may be an AP or a STA, which is not limited.

The functional units or modules of the service information providing device provided by this embodiment may be configured to execute the procedure of the method embodiment shown in FIG. 6. The detailed working principles thereof are not further described. For details, reference may be made to the description of the method embodiment.

The service information providing device provided by this embodiment cooperates with the service information discovery device provided by the foregoing embodiment. A service information indication message is broadcast actively, which helps a neighboring device to discover in time a service that needs to be discovered by the neighboring device, and a length of hash value indication information in the service information indication message is far less than a sum of lengths of service identity information of all services, which reduces the service information indication message, and further reduces channel resources occupied by the service information indication message, and helps to improve utilization of the channel resources. In addition, in a case in which the service required by the neighboring device does not exist in the service information providing device, the service information indication message broadcast by the service information providing device is reduced, which is equivalent to reducing the wasted service information indication message and further reducing the channel resources occupied by the wasted service information indication message, and therefore helps to save the channel resources, and also helps to improve utilization of the channel resources.

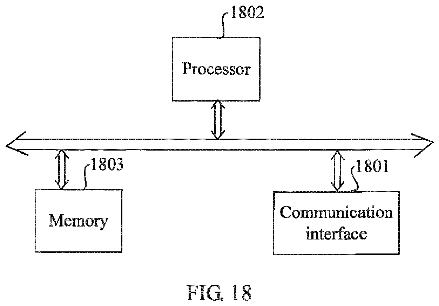

FIG. 18 is a schematic structural diagram of a service information providing device according to still another embodiment of the present invention. As shown in FIG. 18, the device in this embodiment includes: a communication interface 1801, a processor 1802, and a memory 1803.

The memory 1803 is configured to store a program. Specifically, the program may include program code, where the program code includes a computer operation instruction. The memory 1803 may include a high-speed RAM memory, and may also include a non-volatile memory (non-volatile memory), for example, at least one disk storage.

The processor 1802 is configured to execute the program stored by the memory 1803 to obtain hash values corresponding to services that exist at a local end, where the hash values are obtained by performing a first hash operation on service identity information of the services that exist at the local end. The processor 1802 may include one or more CPUs, or a specific ASIC, or is configured as one or more integrated circuits for implementing the embodiments of the present invention.

The communication interface 1801 is configured to broadcast a service information indication message, where the service information indication message carries hash value indication information, so that a peer end that receives the service information indication message determines, according to at least the hash value indication information, whether a service that needs to be discovered by the peer end exists at the local end, where the hash value indication information is used to identify the hash values corresponding to the services that exist at the local end.

In an optional implementation manner, the processor 1802 is further configured to determine a bit table length according to a quantity of the services that exist at the local end, encapsulate a bit table and the bit table length into the service information indication message, and set positions corresponding to the hash values corresponding to the services that exist at the local end to 1, generate the service information indication message, and provide the service information indication message for the communication interface 1801. The communication interface 1801 is specifically configured to broadcast the service information indication message generated by the processor 1802.

In an optional implementation manner, the communication interface 1801 is further configured to: receive a first query request message sent by the peer end, where the first query request message carries service identity information of the service that needs to be discovered by the peer end; and send a first query response message to the peer end according to the service identity information of the service that needs to be discovered by the peer end, where the first query response message carries first result notification information, and the first result notification information is used to identify whether the service that needs to be discovered by the peer end exists at the local end, so that the peer end determines, according to at least the first result notification information, whether the service that needs to be discovered by the peer end exists at the local end.

In an optional implementation manner, the communication interface 1801 is further configured to: receive a second query request message sent by the peer end, where the second query request message carries a first hash value corresponding to the service that needs to be discovered by the peer end and a second hash value corresponding to the service that needs to be discovered by the peer end, where the first hash value and second hash value corresponding to the service that needs to be discovered by the peer end are obtained by respectively performing the first hash operation and a second hash operation on service identity information of the service that needs to be discovered by the peer end; and send a second query response message to the peer end according to the first hash value and second hash value, where the second query response message carries second result notification information, and the second result notification information is used to identify whether a service of which a hash value obtained by performing the second hash operation is the same as the second hash value, exists in services of which a hash value obtained by performing the first hash operation is the first hash value at the local end, so that the peer end determines, according to the second result notification information, whether the service that needs to be discovered by the peer end exists at the local end.

Optionally, if the foregoing communication interface 1801, processor 1802, and memory 1803 are implemented independent of each other, the communication interface 1801, processor 1802, and memory 1803 may interconnect and communicate with each other through a bus. The bus may be an ISA bus, a PCI bus, or an EISA bus, and so on. The bus may be classified into an address bus, a data bus, a control bus, and so on. For ease of expression, the bus is indicated by only a solid line in FIG. 18, which does not mean that only one bus or one type of bus exists.

If the foregoing communication interface 1801, processor 1802, and memory 1803 are integrated into a chip for implementation, the communication interface 1801, processor 1802, and memory 1803 may communicate with each other through an internal interface.

The service information providing device provided by this embodiment may be an AP or a STA, which is not limited.

The functional units or modules of the service information providing device provided by this embodiment may be configured to execute the procedure of the method embodiment shown in FIG. 6. The detailed working principles thereof are not further described. For details, reference may be made to the description of the method embodiment.

The service information providing device provided by this embodiment cooperates with the service information discovery device provided by the foregoing embodiment. A service information indication message is broadcast actively, which helps a neighboring device to discover in time a service that needs to be discovered by the neighboring device, and a length of hash value indication information in the service information indication message is far less than a sum of lengths of service identity information of all services, which reduces the service information indication message, and further reduces channel resources occupied by the service information indication message, and helps to improve utilization of the channel resources. In addition, in a case in which the service required by the neighboring device does not exist in the service information providing device, the service information indication message broadcast by the service information providing device is reduced, which is equivalent to reducing the wasted service information indication message and further reducing the channel resources occupied by the wasted service information indication message, and therefore helps to save the channel resources, and also helps to improve utilization of the channel resources.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A service information discovery method, comprising:
sending (101), by a service information discovery device, a first query request message, wherein the first query request message carries a first hash value, and the first hash value is obtained by performing a first hash operation on service identity information of a service to be discovered;
receiving (102), by the service information discovery device, a first query response message sent by a service information providing device, wherein the first query response message carries first result notification information, wherein the first result notification information is used to identify whether a service of which a hash value obtained by performing the first hash operation is the first hash value exists at the service information providing device; and
determining (103), by the service information discovery device, according to at least the first result notification information, whether the service to be discovered exists at the service information providing device; wherein the first result notification information comprises at least one second hash value, wherein the second hash value is obtained by the service information providing device by performing a second hash operation on service identity information of at least one service of which the hash value obtained by performing the first hash operation is the first hash value; and
the step of determining comprises:
performing, by the service information discovery device, the second hash operation on the service identity information of the service to be discovered, and obtaining, by the service information discovery device, the second hash value corresponding to the service to be discovered; and
if the second hash value corresponding to the service to be discovered exists in the first result notification information, determining that the service to be discovered exists at the service information providing device.

2. The service information discovery method according to claim 1, wherein a bit length of the second hash operation is greater than a bit length of the first hash operation.

3. A service information discovery method, comprising:
receiving (101), by a service information providing device, a first query request message, wherein the first query request message carries a first hash value, and the first hash value is obtained, by performing a first hash operation on service identity information of a service to be discovered, by a service information discovery device that sends the first query request message; and
sending, by the service information providing device, a first query response message, wherein the first query response message carries first result notification information, so that the service information discovery device determines, according to at least the first result notification information, whether the service to be discovered exists at the service information providing device, wherein the first result notification information is used to identify whether a service of which a hash value obtained by performing the first hash operation is the first hash value exists at the service information providing device;
wherein the step of sending comprises:
determining, by the service information providing device, according to the first hash value, whether the service of which the hash value obtained by performing the first hash operation is the first hash value exists at the service information providing device; wherein if it is determined that the service of which the hash value obtained by performing the first hash operation is the first hash value exists at the service information providing device, obtaining, by the service information providing device, a second hash value corresponding to the service of which the hash value obtained by performing the first hash operation is the first hash value, wherein the second hash value is obtained by the service information providing device by performing a second hash operation on service identity information of the service of which the hash value obtained by performing the first hash operation is the first hash value; and
encapsulating, by the service information providing device, the second hash value corresponding to the service of which the hash value obtained by performing the first hash operation is the first hash value, into the first query response message as the first result notification information, and sending, by the service information providing device, the first query response message to the service information discovery device.

4. The service information discovery method according to claim 3, wherein a bit length of the second hash operation is greater than a bit length of the first hash operation.

5. A service information discovery device, comprising:
a sending unit (71), configured to send a first query request message, wherein the first query request message carries a first hash value, wherein the first hash value is obtained by performing a first hash operation on service identity information of a service to be discovered;
a receiving unit (72), configured to receive a first query response message sent by a service information providing device, wherein the first query response message carries first result notification information, wherein the first result notification information is used to identify whether a service of which a hash value obtained by performing the first hash operation is the first hash value exists at the service information providing device; and
a discovery processing unit (73), configured to determine, according to at least the first result notification information, whether the service to be discovered exists at the service information providing device; wherein the first result notification information comprises at least one second hash value, wherein the second hash value is obtained by the service information providing device by performing a second hash operation on service identity information of at least one service of which the hash value obtained by performing the first hash operation is the first hash value; and
the discovery processing unit (73) comprises:
an obtaining module (735), configured to perform the second hash operation on the service identity information of the service to be discovered, and obtain the second hash value corresponding to the service to be discovered; and
a third determining module (736), configured to determine, when the second hash value corresponding to the service to be discovered exists in the first result notification information, that the service to be discovered exists at the service information providing device.

6. The service information discovery device according to claim 5, wherein a bit length of the second hash operation is greater than a bit length of the first hash operation.

7. A service information providing device, comprising:
a first receiving unit (1001), configured to receive a first query request message, wherein the first query request message carries a first hash value, wherein the first hash value is obtained, by performing a first hash operation on service identity information of a service to be discovered, by a service information discovery device that sends the first query request message; and
a first sending unit (1002), configured to send a first query response message, wherein the first query response message carries first result notification information, so that the service information discovery device determines, according to at least the first result notification information, whether the service to be discovered exists at the service information providing device , wherein the first result notification information is used to identify whether a service of which a hash value obtained by performing the first hash operation is the first hash value exists at the service information providing device;
wherein the first sending unit (1002) comprises:
a second determining module (10023), configured to determine, according to the first hash value, whether the service of which the hash value obtained by performing the first hash operation is the first hash value exists at the service information providing device;
an obtaining module (10024), configured to obtain, when the second determining module determines that the service of which the hash value obtained by performing the first hash operation is the first hash value exists at the service information providing device, a second hash value corresponding to the service of which the hash value obtained by performing the first hash operation is the first hash value, wherein the second hash value is obtained by performing a second hash operation on service identity information of the service of which the hash value obtained by performing the first hash operation is the first hash value; and
a second sending module (10025), configured to encapsulate the second hash value corresponding to the service of which the hash value obtained by performing the first hash operation is the first hash value, into the first query response message as the first result notification information, and send the first query response message to the service information discovery device.

8. The service information providing device according to claim 7, wherein a bit length of the second hash operation is greater than a bit length of the first hash operation.

## Patentansprüche

1. Dienstinformations-Entdeckungsverfahren, das Folgendes umfasst:
Senden (101) durch eine Dienstinformations-Entdeckungsvorrichtung einer ersten Abfrageanforderungsnachricht, wobei die erste Abfrageanforderungsnachricht einen ersten "Hash"-Wert führt, wobei der erste "Hash"-Wert durch das Ausführen einer ersten "Hash"-Operation an den Dienstidentitätsinformationen eines zu entdeckenden Dienstes erhalten wird;
Empfangen (102) durch die Dienstinformations-Entdeckungsvorrichtung einer von einer Dienstinformations-Bereitstellungsvorrichtung gesendeten ersten Abfrageantwortnachricht, wobei die erste Abfrageantwortnachricht erste Ergebnismeldungsinformationen führt, wobei die ersten Ergebnismeldungsinformationen verwendet werden, um zu identifizieren, ob ein Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist; und
Bestimmen (103) durch die Dienstinformations-Entdeckungsvorrichtung gemäß wenigstens den ersten Ergebnismeldungsinformationen, ob der zu entdeckende Dienst in der Dienstinformations-Bereitstellungsvorrichtung vorhanden ist;
wobei die ersten Ergebnismeldungsinformationen wenigstens einen zweiten "Hash"-Wert umfassen, wobei der zweite "Hash"-Wert durch die Dienstinformations-Bereitstellungsvorrichtung durch das Ausführen einer zweiten "Hash"-Operation an den Dienstidentitätsinformationen wenigstens einen Dienstes, dessen "Hash"-Wert, der durch das Ausführen der ersten "Hash"-Operation erhalten wird, der erste "Hash"-Wert ist, erhalten wird; und
der Schritt des Bestimmens Folgendes umfasst:
Ausführen durch die Dienstinformations-Entdeckungsvorrichtung der zweiten "Hash"-Operation an den Dienstidentitätsinformationen des zu entdeckenden Dienstes und Erhalten durch die Dienstinformations-Entdeckungsvorrichtung des zweiten "Hash"-Wertes, der dem zu entdeckenden Dienst entspricht; und
falls der zweite "Hash"-Wert, der dem zu entdeckenden Dienst entspricht, in den ersten Ergebnismeldungsinformationen vorhanden ist, Bestimmen, dass der zu entdeckende Dienst in der Dienstinformations-Bereitstellungsvorrichtung vorhanden ist.

2. Dienstinformations-Entdeckungsverfahren nach Anspruch 1, wobei eine Bitlänge der zweiten "Hash"-Operation größer als eine Bitlänge der ersten "Hash"-Operation ist.

3. Dienstinformations-Entdeckungsverfahren, das Folgendes umfasst:
Empfangen (101) durch eine Dienstinformations-Bereitstellungsvorrichtung einer ersten Abfrageanforderungsnachricht, wobei die erste Abfrageanforderungsnachricht einen ersten "Hash"-Wert führt, wobei der erste "Hash"-Wert durch das Ausführen einer ersten "Hash"-Operation an den Dienstidentitätsinformationen eines zu entdeckenden Dienstes durch eine Dienstinformations-Entdeckungsvorrichtung erhalten wird, die die erste Abfrageanforderungsnachricht sendet; und
Senden durch die Dienstinformations-Bereitstellungsvorrichtung einer ersten Abfrageantwortnachricht, wobei die erste Abfrageantwortnachricht erste Ergebnismeldungsinformationen führt, so dass die Dienstinformations-Entdeckungsvorrichtung gemäß wenigstens den ersten Ergebnismeldungsinformationen bestimmt, ob der zu entdeckende Dienst in der Dienstinformations-Bereitstellungsvorrichtung vorhanden ist, wobei die ersten Ergebnismeldungsinformationen verwendet werden, um zu identifizieren, ob ein Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist;
wobei der Schritt des Sendens Folgendes umfasst:
Bestimmen durch die Dienstinformations-Bereitstellungsvorrichtung gemäß dem ersten "Hash"-Wert, ob der Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist; wobei, falls bestimmt wird, dass der Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist, Erhalten durch die Dienstinformations-Bereitstellungsvorrichtung eines zweiten "Hash"-Wertes, der dem Dienst entspricht, dessen "Hash"-Wert, der durch das Ausführen der ersten "Hash"-Operation erhalten wird, der erste "Hash"-Wert ist, wobei der zweite "Hash"-Wert durch die Dienstinformations-Bereitstellungsvorrichtung durch das Ausführen einer zweiten "Hash"-Operation an den Dienstidentitätsinformationen des Dienstes, dessen "Hash"-Wert, der durch das Ausführen der ersten "Hash"-Operation erhalten wird, der erste "Hash"-Wert ist, erhalten wird; und
Einkapseln durch die Dienstinformations-Bereitstellungsvorrichtung des zweiten "Hash"-Wertes, der dem Dienst entspricht, dessen "Hash"-Wert, der durch das Ausführen der ersten "Hash"-Operation erhalten wird, der erste "Hash"-Wert ist, in der ersten Abfrageantwortnachricht als die ersten Ergebnismeldungsinformationen und Senden durch die Dienstinformations-Bereitstellungsvorrichtung der ersten Abfrageantwortnachricht an die Dienstinformations-Entdeckungsvorrichtung.

4. Dienstinformations-Entdeckungsverfahren nach Anspruch 3, wobei eine Bitlänge der zweiten "Hash"-Operation größer als eine Bitlänge der ersten "Hash"-Operation ist.

5. Dienstinformations-Entdeckungsvorrichtung, die Folgendes umfasst:
eine Sendeeinheit (71), die konfiguriert ist, eine erste Abfrageanforderungsnachricht zu senden, wobei die erste Abfrageanforderungsnachricht einen ersten "Hash"-Wert führt, wobei der erste "Hash"-Wert durch das Ausführen einer ersten "Hash"-Operation an den Dienstidentitätsinformationen eines zu entdeckenden Dienstes erhalten wird;
eine Empfangseinheit (72), die konfiguriert ist, eine von einer Dienstinformations-Bereitstellungsvorrichtung gesendete erste Abfrageantwortnachricht zu empfangen, wobei die erste Abfrageantwortnachricht erste Ergebnismeldungsinformationen führt, wobei die ersten Ergebnismeldungsinformationen verwendet werden, um zu identifizieren, ob ein Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist; und
eine Entdeckungsverarbeitungseinheit (73), die konfiguriert ist, gemäß wenigstens den ersten Ergebnismeldungsinformationen zu bestimmen, ob der zu entdeckende Dienst in der Dienstinformations-Bereitstellungsvorrichtung vorhanden ist;
wobei die ersten Ergebnismeldungsinformationen wenigstens einen zweiten "Hash"-Wert umfassen, wobei der zweite "Hash"-Wert durch die Dienstinformations-Bereitstellungsvorrichtung durch das Ausführen einer zweiten "Hash"-Operation an den Dienstidentitätsinformationen wenigstens einen Dienstes, dessen "Hash"-Wert, der durch das Ausführen der ersten "Hash"-Operation erhalten wird, der erste "Hash"-Wert ist, erhalten wird; und
die Entdeckungsverarbeitungseinheit (73) Folgendes umfasst:
ein Erhaltemodul (735), das konfiguriert ist, die zweite "Hash"-Operation an den Dienstidentitätsinformationen des zu entdeckenden Dienstes auszuführen und den zweiten "Hash"-Wert, der dem zu entdeckenden Dienst entspricht, zu erhalten; und
ein drittes Bestimmungsmodul (736), das konfiguriert ist, wenn der zweite "Hash"-Wert, der dem zu entdeckenden Dienst entspricht, in den ersten Ergebnismeldungsinformationen vorhanden ist, zu bestimmen, dass der zu entdeckende Dienst in der Dienstinformations-Bereitstellungsvorrichtung vorhanden ist.

6. Dienstinformations-Entdeckungsvorrichtung nach Anspruch 5, wobei eine Bitlänge der zweiten "Hash"-Operation größer als eine Bitlänge der ersten "Hash"-Operation ist.

7. Dienstinformations-Bereitstellungsvorrichtung, die Folgendes umfasst:
eine erste Empfangseinheit (1001), die konfiguriert ist, eine erste Abfrageanforderungsnachricht zu empfangen, wobei die erste Abfrageanforderungsnachricht einen ersten "Hash"-Wert führt, wobei der erste "Hash"-Wert durch das Ausführen einer ersten "Hash"-Operation an den Dienstidentitätsinformationen eines zu entdeckenden Dienstes durch eine Dienstinformations-Entdeckungsvorrichtung erhalten wird, die die erste Abfrageanforderungsnachricht sendet; und
eine erste Sendeeinheit (1002), die konfiguriert ist, eine erste Abfrageantwortnachricht zu senden, wobei die erste Abfrageantwortnachricht erste Ergebnismeldungsinformationen führt, so dass die Dienstinformations-Entdeckungsvorrichtung gemäß wenigstens den ersten Ergebnismeldungsinformationen bestimmt, ob der zu entdeckende Dienst in der Dienstinformations-Bereitstellungsvorrichtung vorhanden ist, wobei die ersten Ergebnismeldungsinformationen verwendet werden, um zu identifizieren, ob ein Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist;
wobei die erste Sendeeinheit (1002) Folgendes umfasst:
ein zweites Bestimmungsmodul (10023), das konfiguriert ist, gemäß dem ersten "Hash"-Wert zu bestimmen, ob der Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist;
ein Erhaltemodul (10024), das konfiguriert ist, wenn das zweite Bestimmungsmodul bestimmt, dass der Dienst, dessen "Hash"-Wert, der durch das Ausführen der ersten "Hash"-Operation erhalten wird, der erste "Hash"-Wert ist, in der Dienstinformations-Bereitstellungsvorrichtung vorhanden ist, einen zweiten "Hash"-Wert, der dem Dienst entspricht, dessen "Hash"-Wert, der durch das Ausführen der ersten "Hash"-Operation erhalten wird, der erste "Hash"-Wert ist, zu erhalten, wobei der zweite "Hash"-Wert durch das Ausführen einer zweiten "Hash"-Operation an den Dienstidentitätsinformationen des Dienstes, dessen "Hash"-Wert, der durch das Ausführen der ersten "Hash"-Operation erhalten wird, der erste "Hash"-Wert ist, erhalten wird; und
ein zweites Sendemodul (10025), das konfiguriert ist, den zweiten "Hash"-Wert, der dem Dienst entspricht, dessen "Hash"-Wert, der durch das Ausführen der ersten "Hash"-Operation erhalten wird, der erste "Hash"-Wert ist, in der ersten Abfrageantwortnachricht als die ersten Ergebnismeldungsinformationen einzukapseln und die erste Abfrageantwortnachricht an die Dienstinformations-Entdeckungsvorrichtung zu senden.

8. Dienstinformations-Bereitstellungsvorrichtung nach Anspruch 7, wobei eine Bitlänge der zweiten "Hash"-Operation größer als eine Bitlänge der ersten "Hash"-Operation ist.

## Revendications

1. Procédé de découverte d'informations de service, comprenant :
l'envoi (101), par un dispositif de découverte d'informations de service, d'un premier message de requête d'interrogation, dans lequel le premier message de requête d'interrogation comporte une première valeur de hachage, et la première valeur de hachage est obtenue en exécutant une première opération de hachage sur des informations d'identité de service d'un service à découvrir ;
la réception (102), par le dispositif de découverte d'informations de service, d'un premier message de réponse d'interrogation envoyé par un dispositif de fourniture d'informations de service, dans lequel le premier message de réponse d'interrogation comporte des premières informations de notification de résultat, dans lequel les premières informations de notification de résultat sont utilisées pour identifier si un service dont une valeur de hachage obtenue en exécutant la première opération de hachage est la première valeur de hachage existe ou non au niveau du dispositif de fourniture d'informations de service ; et
la détermination (103), par le dispositif de découverte d'informations de service, en fonction au moins des premières informations de notification de résultat, du fait de savoir si le service à découvrir existe ou non au niveau du dispositif de fourniture d'informations de service ;
dans lequel les premières informations de notification de résultat comprennent au moins une deuxième valeur de hachage, dans lequel la deuxième valeur de hachage est obtenue par le dispositif de fourniture d'informations de service en exécutant une seconde opération de hachage sur des informations d'identité de service d'au moins un service dont la valeur de hachage obtenue en exécutant la première opération de hachage est la première valeur de hachage ; et
l'étape de détermination comprend :
l'exécution, par le dispositif de découverte d'informations de service, de la seconde opération de hachage sur les informations d'identité de service du service à découvrir, et l'obtention, par le dispositif de découverte d'informations de service, de la deuxième valeur de hachage correspondant au service à découvrir ; et
si la deuxième valeur de hachage correspondant au service à découvrir existe dans les premières informations de notification de résultat, la détermination que le service à découvrir existe au niveau du dispositif de fourniture d'informations de service.

2. Procédé de découverte d'informations de service selon la revendication 1, dans lequel une longueur binaire de la seconde opération de hachage est supérieure à une longueur binaire de la première opération de hachage.

3. Procédé de découverte d'informations de service, comprenant :
la réception (101), par un a dispositif de fourniture d'informations de service, d'un premier message de requête d'interrogation, dans lequel le premier message de requête d'interrogation comporte une première valeur de hachage, et la première valeur de hachage est obtenue en exécutant une première opération de hachage sur des informations d'identité de service d'un service à découvrir, par un dispositif de découverte d'informations de service qui envoie le premier message de requête d'interrogation ; et
l'envoi, par le dispositif de fourniture d'informations de service, d'un premier message de réponse d'interrogation, dans lequel le premier message de réponse d'interrogation comporte des premières informations de notification de résultat, de telle sorte que le dispositif de découverte d'informations de service détermine, en fonction au moins des premières informations de notification de résultat, si le service à découvrir existe ou non au niveau du dispositif de fourniture d'informations de service, dans lequel les premières informations de notification de résultat sont utilisées pour identifier si un service dont une valeur de hachage obtenue en exécutant la première opération de hachage est la première valeur de hachage existe ou non au niveau du dispositif de fourniture d'informations de service ;
dans lequel l'étape d'envoi comprend :
la détermination, par le dispositif de fourniture d'informations de service, en fonction de la première valeur de hachage, du fait de savoir si le service dont la valeur de hachage obtenue en exécutant la première opération de hachage est la première valeur de hachage existe ou non au niveau du dispositif de fourniture d'informations de service ; dans lequel
s'il est déterminé que le service dont la valeur de hachage obtenue en exécutant la première opération de hachage est la première valeur de hachage existe au niveau du dispositif de fourniture d'informations de service, l'obtention, par le dispositif de fourniture d'informations de service, d'une deuxième valeur de hachage correspondant au service dont la valeur de hachage obtenue en exécutant la première opération de hachage est la première valeur de hachage, dans lequel la deuxième valeur de hachage est obtenue par le dispositif de fourniture d'informations de service en exécutant une seconde opération de hachage sur des informations d'identité de service du service dont la valeur de hachage obtenue en exécutant la première opération de hachage est la première valeur de hachage; et
l'encapsulation, par le dispositif de fourniture d'informations de service, de la deuxième valeur de hachage correspondant au service dont la valeur de hachage obtenue en exécutant la première opération de hachage est la première valeur de hachage, dans le premier message de réponse d'interrogation comme premières informations de notification de résultat, et l'envoi, par le dispositif de fourniture d'informations de service, du premier message de réponse d'interrogation au dispositif de découverte d'informations de service.

4. Procédé de découverte d'informations de service selon la revendication 3, dans lequel une longueur binaire de la seconde opération de hachage est supérieure à une longueur binaire de la première opération de hachage.

5. Dispositif de découverte d'informations de service, comprenant :
une unité d'envoi (71), configurée pour envoyer un premier message de requête d'interrogation, dans lequel le premier message de requête d'interrogation comporte une première valeur de hachage, dans lequel la première valeur de hachage est obtenue en exécutant une première opération de hachage sur des informations d'identité de service d'un service à découvrir ;
une unité de réception (72), configurée pour recevoir un premier message de réponse d'interrogation envoyé par un dispositif de fourniture d'informations de service, dans lequel le premier message de réponse d'interrogation comporte des premières informations de notification de résultat, dans lequel les premières informations de notification de résultat sont utilisées pour identifier si un service dont une valeur de hachage obtenue en exécutant la première opération de hachage est la première valeur de hachage existe ou non au niveau du dispositif de fourniture d'informations de service ; et
une unité de traitement de découverte (73), configurée pour déterminer, en fonction au moins des premières informations de notification de résultat, si le service à découvrir existe ou non au niveau du dispositif de fourniture d'informations de service ;
dans lequel les premières informations de notification de résultat comprennent au moins une deuxième valeur de hachage, dans lequel la deuxième valeur de hachage est obtenue par le dispositif de fourniture d'informations de service en exécutant une seconde opération de hachage sur les informations d'identité de service d'au moins un service dont la valeur de hachage obtenue en exécutant la première opération de hachage est la première valeur de hachage ; et
l'unité de traitement de découverte (73) comprend :
un module d'obtention (735), configuré pour exécuter la seconde opération de hachage sur les informations d'identité de service du service à découvrir, et obtenir la deuxième valeur de hachage correspondant au service à découvrir ; et
un troisième module de détermination (736), configuré pour déterminer, quand la deuxième valeur de hachage correspondant au service à découvrir existe dans les premières informations de notification de résultat, que le service à découvrir existe au niveau du dispositif de fourniture d'informations de service.

6. Dispositif de découverte d'informations de service selon la revendication 5, dans lequel une longueur binaire de la seconde opération de hachage est supérieure à une longueur binaire de la première opération de hachage.

7. Dispositif de fourniture d'informations de service, comprenant :
une première unité de réception (1001), configurée pour recevoir un premier message de requête d'interrogation, dans lequel le premier message de requête d'interrogation comporte une première valeur de hachage, dans lequel la première valeur de hachage est obtenue, en exécutant une première opération de hachage sur des informations d'identité de service d'un service à découvrir, par un dispositif de découverte d'informations de service qui envoie le premier message de requête d'interrogation ; et une première unité d'envoi (1002), configurée pour envoyer un premier message de réponse d'interrogation, dans lequel le premier message de réponse d'interrogation comporte des premières informations de notification de résultat, de telle sorte que le dispositif de découverte d'informations de service détermine, en fonction au moins des premières informations de notification de résultat, si le service à découvrir existe ou non au niveau du dispositif de fourniture d'informations de service, dans lequel les premières informations de notification de résultat sont utilisées pour identifier si un service dont une valeur de hachage obtenue en exécutant la première opération de hachage est la première valeur de hachage existe ou non au niveau du dispositif de fourniture d'informations de service ;
dans lequel la première unité d'envoi (1002) comprend :
un second module de détermination (10023), configuré pour déterminer, en fonction de la première valeur de hachage, si le service dont la valeur de hachage obtenue en exécutant la première opération de hachage est la première valeur de hachage existe ou non au niveau du dispositif de fourniture d'informations de service ;
un module d'obtention (10024), configuré pour obtenir, quand le second module de détermination détermine que le service dont la valeur de hachage obtenue en exécutant la première opération de hachage est la première valeur de hachage existe au niveau du dispositif de fourniture d'informations de service, une deuxième valeur de hachage correspondant au service dont la valeur de hachage obtenue en exécutant la première opération de hachage est la première valeur de hachage, dans lequel la deuxième valeur de hachage est obtenue en exécutant une seconde opération de hachage sur des informations d'identité de service du service dont la valeur de hachage obtenue en exécutant la première opération de hachage est la première valeur de hachage ; et
un second module d'envoi (10025), configuré pour encapsuler la deuxième valeur de hachage correspondant au service dont la valeur de hachage obtenue en exécutant la première opération de hachage est la première valeur de hachage, dans le premier message de réponse d'interrogation comme premières informations de notification de résultat, et envoyer le premier message de réponse d'interrogation au dispositif de découverte d'informations de service.

8. Dispositif de fourniture d'informations de service selon la revendication 7, dans lequel une longueur binaire de la seconde opération de hachage est supérieure à une longueur binaire de la première opération de hachage.
